# EUROPEAN PATENT SPECIFICATION

(11) **EP 1 924 052 B1**
(45) Date of publication and mention of the grant of the patent: **04.04.2012**
(21) Application number: 08000815.4
(22) Date of filing: 20.10.2004
(51) Int. Cl.: H04L 29/06, G06F 3/01

(54) **System for communication based on virtual reality**
System zur Kommunikation auf der Basis virtueller Realität
Système de communication basé sur la réalité virtuelle

(30) Priority: 30.10.2003 ES 200302543
(43) Date of publication of application: 21.05.2008
(62) Divisional of application: 04791372.8
(73) Proprietor: Frontera Azul Systems, S.L., 18012 Granada (ES)
(72) Inventor: Alex Jimenez, Pablo, 28003 Madrid (ES)
(74) Representative: Carpintero Lopez, Francisco

(56) References cited:
- EP-A2- 0 580 353
- WO-A1-02/100284
- US-A1- 2002 056 120
- US-A1- 2003 126 265
- US-B1- 6 181 343
- US-B1- 6 409 599
- GREENHAIGH C ET AL: "A QoS architecture for collaborative virtual environments" PROCEEDINGS ACM MULTIMEDIA 99 ACM NEW YORK, NY, USA, 1999, pages 121-130, XP002578299 ISBN: 1-58113-151-8
- ICHINOSE S ET AL: "INTERSPACE: NTT'S CYBERSPACE COMMUNICATION PLATFORM" JAPAN TELECOMMUNICATION REVIEW, TELECOMMUNICATIONS ASSOCIATION. TOKYO, JP, vol. 9, no. 3, 1 May 1997 (1997-05-01), pages 49-54, XP000694465 ISSN: 0915-2334

## Description

### OBJECT OF THE INVENTION

This invention refers to a system and procedure for communication between human beings based on virtual reality. The system constitutes a communication platform that facilitates and speeds up collaboration between interlocutors that are geographically distant, who keep their identity and privacy in a shared environment.

The virtual reality environment is formed by collaborative virtual settings, the basic qualities and objects of which are: representation, behaviour and communication channels and the interaction of human interlocutors in virtua! settings; automats and their intelligent behaviour generation system and interaction; the link between the virtual environment and data coming from external channels; and the basic connection interface. The communication procedure improves the quality of the content of human communication based on electronic media, as well as the comfort of the communicative experience and the perceptive levels at which information is captured.

### BACKGROUND TO THE INVENTION

### Virtual meeting:

There are communication systems based on traditional telephony and voice multiconference, videoconference - either standard, on dedicated network or by Internet, electronic messaging, forums and chat rooms in Internet, advanced chat rooms in Internet based on 3-dimensional representations of participants with mobility activated by sentences, sometimes including voice channels, multimedia networks that allow various interlocutors to meet in computer-represented conclaves with voice-based dialogue, data exchange and possible facial representation by videoconference, automats and smart agents in Internet with realistic facial and body gestures mostly aimed at information or user support points, and collaborative, networked environments with the possibility of interacting in a group by means of more or less characterised representations of the participants, allowing for conversation in small groups through public or private servers and with interaction with the shared environment, mostly intended for networked games.

### Virtual reality:

In general, it may be said that virtual reality (VR), as it is known today, is fundamentally associated to the concept of interactive human sensorial simulation, mostly attending to the visual and hearing aspects at perceptive level, although progress is being made very fast as regards the other senses of human beings. In this regard, there are multiple graphic engines and sound software that allows to create a graphic and sound environment that is shared by many users connected to a computer network or to the Internet. These environments allow users to be represented by avatars (graphic representations of the human beings connected to the network), allowing them to speak together and carry out basic mobility actions and enable behaviour of shared graphic objects. Therefore, along with the use of VR immersion devices such as data gloves or head mounted displays, it is possible to speak of shared virtual reality settings as a palpable reality. US 6,409,599 discloses a state-of-the-art VR environment.

Normally, the graphic engines that enable this experience work in a network environment, in which users occupy PCs that are remotely connected to servers and constantly updated with any information that is necessary for keeping the shared graphic and sound environment perfectly consistent.

Many of these engines may be modified by their purchases, allowing to personalise local and network behaviour, including new graphic and behavioural functions.

The basic representation of the graphic objects that make up the virtual setting is two- or three-dimensional, as their surfaces contain colour channels and images that are applied on a simultaneous basis but with variable levels of transparency. The graphic representation of the objects in the virtual setting can take into account the latest techniques for lighting and optimising the speed of calculation of the photograms, attaining very high standards of realism and interaction. Techniques may also be used to overlap images or two-dimensional videos in the three-dimensional space to simulate effects such as the sky or positional dynamics of particles.

Moreover, the virtual setting may be represented using stereoscopy techniques, making use of standard software tools and allowing three-dimensional viewing of same by exhibiting two images alternating in time in the same setting, but seen from two different angles (corresponding to the eye parallels), at calculation frequencies that avoid the sensation of the image flickering. There are various viewing devices that allow the spectator to perceive this stereoscopy as a sensation of depth in the image.

Viewing in this type of stereoscopic environment using VR glasses and surrounding positional sound techniques allows for a high degree of immersion. In addition, other devices allow to bring the rest of the human senses close to the synthetic reality.

The objects in the virtual environment have various characteristics as regards their mobility: hierarchy of subparts, variation in position and orientation, variable morphology and collision detection.

In the case of a three-dimensional object, the morphology may be based on a hierarchy of dependences of subparts that make up the complete object. This hierarchy is used to apply sequential twists to the subparts. The hierarchy of subparts may be sequential twists that are predefined or calculated in real time, communicated or enabled by events, using direct or inverse cinema techniques. In any case, the intermediate positions between two communicated consecutive angles for the same union of two subparts may be interpolated in the local system, defining a calculated number of twist sub angles that will define the final movement of the sub hierarchy of dependent subparts, lending them greater local fluidity in viewing and independence from communication problems with the remote system in the transmission of the main angles if communicated by the remote system.

An object may have a two- or three-dimensional movement defined, normally based on its centre of mass, to be represented in the virtual space, communicated and enabled by events. In any case, the intermediate positions between two consecutive positions communicated for the same object may be interpolated in the local system, defining a calculated number of sub positions that will define the object's movement, lending it greater fluidity and independence from communication problems with the remote system. The procedure for generating communicated positions may follow a curve situated in the three-dimensional setting, corresponding to a route that is established in advance, or a path generated in real time according to a procedure that is associated to the object.

The shape of any two- or three-dimensional object may be varied in real time on the basis of data that is normally communicated to the local system. This change of shape may follow pre-defined criteria in designing the variable morphology of the object, or calculated criteria, but in any case, It is defined as a variation in the relative position between the vertices that make up the two- or three-dimensional morphology of the object, and/or a variation in the number.

Three-dimensional objects may define predefined behaviour when in contact with other three-dimensional objects, which may imply a change in the course of the movements of the colliding objects, in their speed and acceleration, in the twists of the subparts or in the morphology of the objects.

An object in the setting may have one or two audio channels associated, each of which contains sound, either predefined or communicated in real time from a sensor or remote system. The corresponding sounds will be reproduced using loudspeakers outside the local system, depending on the events. By means of a procedure that is predefined for this object and by making use of the relative position between the Interlocutor avatar and the emitting object, both of which are in the same virtual space, the sound channels shall automatically be positionally located in the virtual space, and this positioning shall be taken into account in the reproduction of the loudspeakers that are external to the local system, providing a changing, wrap-around panoramic effect depending on the orientation of the Interlocutor's head in the virtual space in terms of the positions of the channels. The area of action of the sound emitted by each channel is defined by means of an intensity cone, which may become a sphere, and which represents the maximum intensity of volume at the vertex and the minimum at the ends. Outside this cone, the sound corresponding to the focus or channel is not reproduced. In addition, the cone may be limited in its action in the virtual setting, by the interpositioning of special objects that have the capacity of damping or eliminating the sound intensity beyond them depending on their soundproofing characteristics.

### Means of payment and logistic tracking of purchase/ sale operations:

There are currently various standards approved by various countries for facilitating banking transactions over communication networks. The difficulty in commissioning and using these is usually inversely proportionate to the levels of security provided by the payment system. In banking transactions that are performed remotely by users, the transactional system is installed on TCP/IP (Internet) or WAP (mobile communications) networks or on proprietary systems (such as Automatic Teller Machines).

The establishment of public key-based infrastructure allows to guarantee confidentiality (by ciphering the data that travels in the network), authenticity (through the use of digital signatures) and non-repudiation of data. Within the logistics of deploying this type of system, various levels of service are involved:
- Certification Authority (CA). The CA issues certificates for the parties involved, providing proof that whoever presents a public key is whoever they claim to be.
- Directory. This is a database where the certificates are published and made available to any entity.
- Certificate revoking system. In charge of dealing with cases of theft, loss or suspension of public keys.

In an Internet banking system, there are two main functionalities or phases: user authentication and transaction authorisation.

By means of the SSL (or TLS) protocol, a user with a digital banking operation certificate may be accredited before the system, whereas the system is accredited before the user by means of its own server certificate. This protocol guarantees the confidentiality and integrity of the data. In mobile systems, the protocol that is used is WTLS.

The banking system saves the transaction orders that are digitally signed by the users with digital signature key, using the PKCS#7 and S/MIME standards in safe messaging.

In authentication, a user provides the server with a challenge-response that is digitally signed with his/her private key. The server verifies that the certificate is correct and associates the identifier or alias present on the certificate to a customer's bank contract.

A transaction is authorised when the user returns the digitally signed order and the server validates and saves it.

In retail sale operations (merchant to end customer), one common standard are SET-based transactions (Secure Electronic Transaction), which emulates in a secure electronic manner the payment of goods and/or services by credit and debit card. In this case, there are three new interlocution processes:
- SET Merchant. Entity in charge of managing payment by a purchaser. Usually called POS (Point of Sale), simulates the functioning of transactional systems.
- SET Cardholder. Acts on behalf of the cardholder to make the payment. Usually called Wallet.
- SET Gateway. Functions as the bridge between the accepter and the financial system.

Each of these interlocutors needs a certificate to operate in the transaction. These certificates are generated by the SET CA (SET Certification Authorities), which are normally financial institutions that are capable of issuing cards (issuers) or associated institutions (such as banks) that request the issue of cards.

A SET-based purchase process includes the phases of the customer requesting the purchase from the supplier while indicating the card brand, the customer's final purchase request to the supplier and the authorisation request from the supplier to the payment gateway asking if the customer can make the payment in question. By means of the dual signature, the customer includes data that is protected for the supplier and the gateway in his/her purchase request, so that the supplier may only see the details of the purchase (order, method of payment or amount), and the gateway may only see the details of the payment (card number, method of payment or amount).

Another standard is based on SSL transactions and is known as Virtual Point of Sales or VPOS. In this method, the transaction order issued by the purchaser is not signed digitally, thus eliminating the need for the purchaser to possess a digital certificate. Like in the SET system, the supplier does not have access to the credit/debit card number, as it is the gateway that directly requests the authentication of the merchant.

Finally, mini-payment or electronic purse systems allow to avoid the high commissions charged on credit/debit card transfers. Within the mini-payment (or micro-payment) option, there are various modalities: electronic wallet, rechargeable chip cards or purse card with a value that is set in advance. In any case, the philosophy is the same, a prepaid available balance paid using standard resources (such as a credit card or telephone contract) for making small payments. An intermediate service manages the collection of the global amount of the balance when the wallet or card is recharged.

### DESCRIPTION OF THE INVENTION

The following invention defines a specific way of joining technologies, and a set of rules to govern the behaviour and use of the tools by the interlocutors, which allows to create a highly advanced, single platform for interaction and cooperation, with the possibility of substituting a conventional meeting in a well-defined number of cases. Given the medical limitations on the prolonged use of virtual reality immersion devices, the industrial profile of the use of this system is aimed at communications that are not excessively long, in which the levels of concentration, information capture and interlocution are very high, due to the adaptation of the collaborative environment to the need for specific interlocution. The communication procedure determines a correct sensorial representation of the collaborative environment, in order to attain the correct levels of immersion, relaxation and humanisation in the virtual platform, so as to allow for above-normal human concentration and productivity, in the aforementioned time limit of the communication.

### Objects in the collaborative environment (communication procedure).

The communication procedure is based on an environment of virtual settings in which the Interlocutors co-exist and communicate with each other. A virtual setting represents a virtual volumetric space created by a computer, in which objects are situated. The objects are the most important elements that make up the virtual setting for collaboration and may be of three types: data channels with virtual representation, smart agents and virtual objects. A virtual space is a sensorial space that has been artificially created using technology. This space is enjoyed by smart agents, by means of immersion devices, which meet some minimum credibility requirements in contrast to the sensitive reality that is known by the user agent.

The agents are human or artificial intelligences, connected in a network from PCs to servers of collaborative spaces. In the case of the humans, the interface for connection between the PC and the human is made using input/ output hardware systems (such as a positional tracker, stereoscopic viewers, data gloves or electrical and thermal sensors). In the case of artificial intelligences (Als), the connection interface is made using software emulators of signals that are typical of the human interface, enabled and directed by the artificial intelligence itself.

The data channels reproduce data that is recorded in advance or captured in real time by means of sensors that are connected to local PCs. They have a sensorial representation (such as a three-dimensional structure, sound or image) that identifies them in the virtual environment, and a dialogue language that is used by the user agent, in order to perform their function: to be reproduced.

The virtual objects also have sensorial representation, but they are not directly associated to information from sensors and their behaviour is based on programmed functions that are enabled following events in the collaborative environment that are identified using programmed software sensors, or enabled using a proprietary communication language used by the user agent.

The agents possess personal inventories of data channels and virtual objects that may be exhibited, exchanged, sold or left in the virtual setting. The exhibitors of the virtual environment allow for the direct exhibition of data channels.

Human users can organise themselves in working groups using network forms with access to the servers. Moreover, they may send through the network pre-recorded data corresponding to any type of data channel that is accepted by the system, which will then become channel type objects available either in their inventory, or in the inventory of the users of a particular working group (shared objects).

The human user connects up to the collaborative environment by means of a terminal that is connected through a network to the servers of collaborative environments, by means of a unique identifier and certain VR gestures that are univocally associated to him/her.

### Informative and access properties:

All objects in the virtual environment have associated a detailed description and data of interest regarding the functioning and qualities of the object. This description is formatted in a predefined representation language that is known to the agents, for the identification of the parts that make up the description. The description may be organised in sections, each of which has a defined access level. Each agent has associated access rights that are contrasted with the access levels of the sections when a request for information is made by means of the appropriate enablement gesture, in order to define which fragments shall be accessible. The exhibition of the informative content in the virtual environment occurs by means of a pop-up window with legible information. Furthermore, the agent may enable the automatic reading mode, meaning that the explanatory text is read to the agent by a voice synthesiser, with or without a pop-up window.

### Persistence of objects:

All objects have associated a persistence status that is calculated according to the values of the levels of potential at any moment. The levels of potential are counters that are associated to each object, and within each object, to each type of action of same. These levels of potential have a default value, which decreases with the consumption that is performed by each action, in an amount that is defined by a decreasing value associated to the type of level, as well as the appreciated intensity of the action of the object. The persistence status of the object is calculated by means of a mathematical function that takes the various current values of the object's levels of potential. When this persistence status becomes null, the object may no longer go on existing in the virtual space and is eliminated from the environment. The potential levels may be recharged as far as the maximum limits that are defined for each type of level. The way that this is done depends on each object and normally consists of making a positional contact with potential-charging objects of the same type.

### Valuation of objects:

Los users of the system have the possibility of using real money, to acquire virtual objects or valued data channels. Any object may have an economic value associated.

### Possession of objects:

The possession of object by a registered agent or user in the system, is reflected in a central database (DB) protected with anti-intrusion insurance systems through a firewall and the local security measures of the DB server. It is in this DB that a user is associated to a particular object in the virtual environment. The operations to acquire real objects associated to virtual objects, or directly from virtual objects, involving a real bank transfer operation or electronic money transfer, are characterised by various phases aimed at identifying the real ownership of the object:
- The acquisition process is performed after the banking transaction (SET or SSL system) or electronic money transaction (mini-payment system) is complete. This transaction is safe and certifies payment of the value of the object through an account that is associated to the card of the connected agent (SET), an account that is associated to the card used by the agent (SSL), or an electronic wallet, purse card or chip card associated to the customer (mini-Payment).
- In the case of downloadable virtual objects or pre-recorded data channels, the security in the property assigned in the DB is carried out by following procedures that are similar to the procedures used in the purchase of downloadable material by the Internet, in purchase portals. In the case of pre-recorded channels, the material is downloadable to PCs that are connected in the network through the user connection account, through secure web pages. Moreover, their possession within the virtual environment is ensured thanks to the security provided by the DB server and its firewall.
- In the case of real objects, the supplier of the real object associated to the virtual object acquired, certifies effective delivery of the object to the purchaser, like in any web purchase operation.

Each agent has an inventory of the objects it possesses associated. In general, an object is the exclusive property of an agent and only the agent may use it. However, at the request of the initial owner through an inventory maintenance form from the network, or directly from the virtual setting through a certain VR gesture, an object may be made available to the agents in the owner's group, or to another agent at whom the owner is looking.

An object may be defined to be concealable if after it has been included in the inventory, its visual, auditory and sensorial information may be removed from the virtual setting by means of a VR gesture. An object may be defined as internal or external. If it is internal, it is the permanent property of its proprietary agent and the latter may not be able to exclude it from the inventory. An object may be defined as destroyable. In this case, the owner may make it disappear (both its representation in the virtual environment and in the associated channel, where applicable), with a VR gesture. An object may be defined as numerable. This implies the possession of a defined number of units of the same object. Finally, an object may be defined as duplicatable. This means that a user that possesses this object can offer a copy to another agent through an exchange process.

### Obtaining information on an object:

The interaction of an agent with an object in the virtual setting may take place in various ways: either to obtain information on an object, to enable its behaviour, to manage the personal inventory of channel and virtual types of objects. When a human looks at an object a maximum distance that is predefined or calculated for each object and depends on the volume of same, and performs a particular VR gesture, the system calculates which sections of detailed information he/she may access depending on their access levels, and the detailed information on the object, depending on the entitlements and appropriately classified in sections, emerges and floats in front of the Interlocutor. This direct gaze is calculated on the basis of the human's position and the orientation of his/her head in the virtual environment, as regards the position and orientation of the object being looked at. With a new VR gesture, this floating information will disappear. If the human has enabled the translation function, the text shall be read by a voice synthesiser.

An Al may also obtain information on an object by making a direct request for information on it. In this case, the visible sections shall not necessarily be displayed, but shall in any case be sent to the Al to be processed by it on a direct basis.

### Inventory management:

Each agent possesses a personal inventory containing channel and virtual type objects, Each of these objects may be displayed to surrounding interlocutors using its sensorial display model, which is normally the same three-dimensional model that represents the object in the free status, but automatically scaled to be displayed to other agents in a comfortable, once-off manner. The objects may be freely exchanged between the proprietary agents by means of the exchange process, and even physically left in the virtual space and made available to other agents wishing to get them (free status). The data channels may be reproduced in the shared virtual environment in exhibitors that are prepared for this purpose for each type of channel. In this regard, for example, an exhibitor may be a virtual video screen that displays video that is visible to the surrounding agents, or a fixed or mobile surface in the environment, which reproduces heat in external reproducers (resistances) fitted to the body of the human user of the agent that enters into contact or in the area of the surface in the virtual environment.

The inventory interface represents a browseable, two- or three-dimensional, graphic, sonorous and sensorial reproduction containing the list of objects possessed by the agent. By means of VR gestures, it is possible to enable, disable and browse the items that represent the objects in the inventory. Each step from one item to another is represented by a graphic, sonorous and/or sensorial effect that clearly identifies the associated selected object.

This inventory interface is context-sensitive and displays only objects of the right type at any time, offering an RV gestures language that also depends on the context. In this regard, it may be said that the general inventory is handled using multiple interfaces that depend on the context. The conditions that are necessary and sufficient for one or another interface to be enabled by means of a general VR gesture to access the inventory are present. These conditions are expressed in terms of the spatial positioning and orientation of the agent as regards other elements, such as the exhibitors, and the statuses of the virtual environment and its objects. For example, an agent looking from a short distance at a video screen that is floating in the virtual space (context), performs the VR gesture to enable the inventory and if the screen is free, he/she will enable the interface corresponding to the video and image channel type objects in his/her possession, as this situation of events and context makes action possible. Another example is the agent that enables the inventory without looking at any exhibitor at the right distance, when in a visual space that is classified as an office in the virtual environment. In this case, the subset that is enabled is the subset of virtual objects that are suitable for use in the office. It is important to highlight that the contexts need not be mutually exclusive and shall be sorted with a view to settling the conflict of selecting the right interface and therefore, the language of use.

Therefore, the objects are classified according to object type (such as vehicle type virtual objects or video type channels), and the types are classified according to the possible context of use. Each object type may be classified in more than one context.

It is necessary to differentiate clearly between the exhibition of a data channel, sample representation and virtual representation. Exhibition refers to the projection of the data in the channel on an exhibitor, regardless of whether it has output to an external reproducer or not. Sample exhibition is a sensorial representation, normally a scaled, three-dimensional, graphic representation, which represents the object for temporary display to other interlocutors. Finally, virtual representation is the sensorial representation of the object in "free" status in the virtual environment or in "in use" status displayed by the proprietary agent.

### Sending contents:

Human users can send across the network, using network templates that are accessible from desktop PCs or mobile units, pre-recorded data corresponding to any type of data channel accepted by the system, which will become channel-type objects available either in the inventory or in the inventory of the users in a working group (shared objects) and/ or third parties.

An agent can send a message (including, for example, text, voice and/or image or video) to a user that is registered in the system. In order to do so, he/she will access his/her inventory in a VR gesture that defines a sending context. By browsing in the inventory, he/she will be able to choose his/her own objects from the ones that are allowed in the message, and also record for the message, by means of a VR gesture, sound currently received by the agent him/herself (including voice) and images currently viewed in the virtual environment, or any other type of information coming from the sensors, in the form of a pre-recorded channel. The receiver will be chosen by accessing a personal contacts list, selecting one or more and finally selecting the sending format (i.e. sms or e-mail). The system will filter the information adequately so that it may be adapted to the type of message selected and will send it from the messaging servers.

### Request for possession of a free object:

An object may be in free status when it is not in the possession of an agent, although it may be in the possession of a non-agent user that is registered in the system as a supplier of objects. The specific meaning is that possession may be automatic without the need for interlocution with the owner based on an exchange process.

A free object represented in the virtual setting may be requested by an agent for possession by means of a prolonged gaze at the object and some form of VR gesture. When an object is possessed, it enters the owner's inventory. If the object has the property of concealability, its representation disappears from the virtual setting when it is inventoried.

A free object may have an associated acquisition price and owner that is registered in the system (not necessarily an agent). In this case, an agent with a bank account and a credit/ debit card, or with an electronic wallet or chip/purse card, may request to possess it. The owner must have a bank account associated and give his/her permission for the system to operate on his/her behalf in collection management (through the official intermediaries, depending on the collection method that is used). The virtual system will always request confirmation from the payer before performing the banking exchange operation between the accounts or the electronic money transfer operation. If the purchaser has a secure identification card (SET) or if it is a mini-payment operation, the transaction will be automatic. Otherwise, he/she will momentarily access a virtual POS to introduce his/her card details. The operation may be revoked by the banking gateway.

In addition, the object may need automatic logistic and stock confirmation through messaging with the supplier, before proceeding to collection, which will be through a logistic server in the system, connected to the suppliers. The DB keeps records associated to the purchase/sale operation, which may be consulted as regards the item purchased in the inventory, by means of VR gestures, in order to track the logistic status.

Each object that is purchased may automatically motivate at the moment of confirmation of the purchase, the electronic sending of the necessary information to the supplier, with a view to, for example, proceeding to physical delivery in the real world. In this case, the information that is sent will clearly identify the purchase/sale operation and the receiver.

### Use of an inventoried object:

An object may be used by its proprietary agent, enabling the inventory subset in the current context and selecting it for use by means of a particular VR gesture. Each inventory subset representation has its own VR gestures language for communication. As we have seen, the enabling of the subset depends directly on the context, i.e. a video channel will have a different form of use through the subset defined by the context of a video exhibitor, than the subset defined by the context of an audio exhibitor, where only the audio channel of the video shall be allowed for be exhibited by means of a language that is appropriate for the reproduction of audio-type data.

Therefore, the use of a channel-type inventoried object is associated to the types of exhibitor where its data may be reproduced and to the communication language of the inventory subset defined by same through the context.

Each object type has an associated use chain. When the objects that have the same use chain are used by the same agent, they are incompatible, i.e. only one object in each chain may be used at the same time. A use chain means that with just one VR gesture associated to the chain, the object used in the chain is sequentially changed on a cyclical basis.

There may be dependencies of use between objects, meaning that in order that an inventoried object may be used, it may be necessary for there to be another object, inventoried or otherwise, in the virtual environment. At the same time, there may be dependencies of use of an object as regards events or statuses of the collaborative environment. In this case, the possibility and way in which the object is used may depend on elements that define the current status of the collaborative setting.

### Displaying inventoried objects:

One or more inventoried objects may be displayed or concealed by the owner by making a selection from the inventory interface according to VR gestures. As the objects are displayed, they are placed in their display representation around the owner, in the lay-out and orientation that have been predefined for this agent, allowing for a maximum number of simultaneous displays. The representations that are displayed need not have the same dimensions or graphic aspects as the represented object, which means that there will be an association between objects to be represented and representations displayed, and a definition of such representations as virtual graphic objects.

One or more inventoried objects may be displayed by the owner by means of real representation, and left in static locations in the virtual setting, without leaving the inventory. These are known as placed inventoried objects.

### Excluding an object from the inventory:

An external inventoried object may at any time be excluded from the personal inventory, either by leaving it free in the virtual environment or deleting it entirely if it is destroyable. Each operation shall be enabled by selecting the object from the user interface and performing a particular VR gesture. If the object was being used or displayed, this will cease when it is no longer owned by the agent.

When the object is a group object, it may be only be excluded by its initial owner, who made it available to the group. Once excluded, it will disappear from the inventory of the agents in the group and paralyse any attempt at display or exhibition that may be occurring by the proprietary agent or any other.

### Negotiating the exchange of possessed objects:

Agents may exchange the objects they own (in the case of group objects, owned by the initial proprietary agent). When an agent starts a negotiation, he/she does so by launching a negotiation request on another agent by means of a VR gesture. If the interlocutor accepts the negotiation via the VR gesture, both access an extended representation of their own personal inventories in the context of negotiation with their own gestures language, classified according to the types of object, including two additional representations of same, as well as the browser of owned objects: interlocutor browsing section and the input section.

The interlocutor browsing section represents a manageable browser based on VR gestures, which allows to sequentially pass between the various current interlocutors with whom the agent is negotiating a possible exchange. The input section represents a list of objects that may be browsed using VR gestures. This list is associated to the current interlocutor that is selected in the interlocutor section, and displays the objects that the interlocutor in question wishes to exchange with the agent. Each object indicates relevant information, such as a short description, number of units and associated monetary value. Finally, in the owned objects section, the agent marks the objects he/she wishes to exchange with the interlocutor that is currently selected, including amounts if they are numbered. In addition, a marker in this owned objects section marks the current accumulated monetary value, which corresponds to the objects that are valued in the input section. Any change that an agent performs on his/her owned objects section is immediately reflected in the input section of the associated interlocutor and possibly in the latter's owned objects section (amount of a new negotiation element). The system does not allow one of the two interlocutors to offer objects that are financially valued, if he/she possesses in his/her input section in the negotiation valued objects that have been offered by the interlocutor.

An agent may establish a specific monetary value for an object in his/her inventory and for a particular negotiation, selecting it and performing a VR gesture that allows him/her to establish a value on the basis of a variable speed sequential scroll. In addition, the object may have a monetary value previously informed in the system. It is also possible to establish a virtual value.

There are two ways of starting an exchange negotiation between two agents:
a) Agent A displays objects from his/her inventory around him/herself or by means of placed inventoried objects. Agent B stares at one of these objects and performs a particular VR gesture. In this case, the corresponding inventory interfaces are automatically enabled. The selected article appears in agent B's input section and the same object appears in the owned objects section of the selected agent A. In addition, if the object is valued, the monetary marker associated to the amount will appear in agent B's owned objects section. This obviously means that in this mode, each agent's interlocutor browsing section displays the corresponding interlocutor.
b) The selling agent stares at the purchasing and performs a particular VR gesture. In this case, the extended inventories are opened, without prior selections in the owned objects or input sections. The opposite interlocutor appears again in the interlocutor browsing sections.

If an external agent C wishes to negotiate with an agent A that is in the middle of another negotiation, he/she will do so according to the indicated procedure, and agent A will incorporate a new three-section entry (owned, input, interlocutor) corresponding to the new negotiation. Agent A may browse between the various negotiations underway by means of VR gestures.

An agent may exclude him/herself from negotiation that is currently selected (to an interlocutor) by means of a VR gesture. At any time, a participant may use a VR gesture to ask to close the selected negotiation. This means that the interlocutor that is asked to close the negotiation will receive a closure request indicating the person making the request, forcing a change in the selection of the inventory to reflect the associated negotiation. By means of a VR gesture, this request may be accepted by the interlocutor receiving the request, leading to the proposed change of objects between both negotiators' inventories, or refused, returning to the former negotiation status.

A negotiated object may be a copy of the original if it has the characteristic of duplicable. In this case, the exchange as duplicate is decided by the possessor by means of a VR gesture and this object is identified as a duplicate in the corresponding sections. Once the exchange has been made, the object remains in the source inventory as duplicable, and a copy of the duplicate is sent to the destination inventory. Otherwise, the exchanged object disappears from the source and appears in the destination as a duplicable object.

A negotiated object may be established as being of deferred elimination, using a VR gesture to establish its duration in terms of the number of uses or lifetimes. If the interlocutor acquires the object, its use or time will depend on these values. When the useful life has ended, it will disappear from the purchaser's inventory.

An agent may enable the negotiation display mode. IN this case, the agent will display to each negotiating interlocutor, and only to the latter, all of the selected objects in its owned objects section that are in negotiation with same. This shall be carried out by means of the viewing of the display representations of the objects involved.

In addition, an agent may enable the individual confidentiality in current selected negotiation functionality, which must be accepted by the associated interlocutor. Thus, the oral interlocution is filtered in such a way that when these two interlocutors have the other one in their respective interlocutor sectors, they can both hear each other but the others cannot hear them.

When the exchanged objects are exclusively virtual, the transaction is only performed between the inventories of the negotiators.

### Advanced negotiation: use of banking gateway, electronic money and confirmation and delivery orders

There are two exchange modalities:
- Exchange of objects without associated value
- Exchange of objects, in which an interlocutor includes objects that are financially valued.

When one of the interlocutors transfers real money to the other in the exchange, either in order to purchase a virtual object or to issue a purchase order on a real object that is represented by the virtual object exchanged, it is necessary to use a negotiation based on banking transactions (SET, SEL) or on electronic money transactions (mini-payment). The agent purchasing an article must have a bank account and a credit/debit card (SET, SEL) or an electronic wallet or chip/ purse card (mini-payment). The owner must have an associated bank account and provide his/her permission for the system to operate on his/her behalf in managing the collection (through the official intermediaries, depending on the collection method that is used). The virtual system will always request confirmation from the payer before performing the banking exchange operation between the accounts or the electronic money transfer operation. If the purchaser has a secure identification card (SET) or if it is a mini-payment operation, the transaction will be automatic. Otherwise, he/she will momentarily access a virtual POS to introduce his/her card details. The operation may be revoked by the banking gateway

In addition, the object may need automatic logistic and stock confirmation through messaging with the supplier, before proceeding to collection, which will be through a logistic server in the system, connected to the suppliers. The DB keeps records associated to the purchase/sale operation, which may be consulted as regards the item purchased in the inventory, by means of VR gestures, in order to track the logistic status.

Each object that is purchased may automatically motivate at the moment of confirmation of the purchase, the electronic sending of the necessary information to the supplier, with a view to, for example, proceeding to physical delivery in the real world. In this case, the information that is sent will clearly identify the purchase/sale operation and the receiver.

### Definition of smart agent:

In general terms, the users of the virtual communication platform are represented as Interlocutors in the virtual setting by means of realistic three-dimensional graphic models that include personalised or selectable facial and bodily characterisation elements, by means of body and environmental expressivity that is communicable and limited in space and controlled by sensors and processors of bodily or external electrical signals, magnetic signals, weight, temperature, pressure, friction, acceleration, smell and taste, and by means of a capacity to perceive the virtual environment that is facilitated by devices for immersive viewing, positional hearing, the generation of electrical or magnetic impulses applied to areas of the body, for generating smell, generating temperature, generating pressure, generating taste, impulsing fluids and particles, and assisted body mobility. This real time data are communicated through the data channels.

The communication platform makes use of automats to lend intelligent behaviour to autonomous elements in order to support and humanise the interaction with the virtual environment. This is achieved by means of a set of automats that may be connected on an independent and autonomous basis or controlled by behaviour servers, and may be represented in the virtual setting by means of graphic models that may or may not coincide with humanoid representations such as those that are described in the case of interlocutors, by means of behaviour that is controlled by a system for generating behaviour based on artificial intelligence and by means of computer sensors that are programmed in the virtual environment both at customer and server levels and which provide the data that is necessary for decision-making by the behaviour generating system, and which will be able to receive data that is communicated by sensors and signal processors that are used by the humans that are connected to the system.

Therefore, there are two potential users of the virtual environments described herein: humans and artificial intelligences (Als). The humans will wear connection devices (sensors and actuators) for virtual immersion, such as stereoscopic glasses, earphones, data gloves, clothes with sensors and body temperature emitters or positional trackers.

The Als shall not require this apparel, because they are programmes that are connected to the virtual environment by means of software interfaces, but they will need a software to interpret the virtual setting as it is communicated to the customer PCs, recognising objects, distances, exhibition of data channels, etc. At the same time, the Als will have to express themselves in the virtual environment simulating human behaviour and the data that reflects this human behaviour, i.e. the signals from the human devices.

We shall refer to all of these as smart agents, or simply agents. The agents have a set of rules of behaviour that regulate the way in which they can communicate and move within the virtual environment, including a description of mobility, communication with other agents and communication with virtual objects and channels.

### Identity of agents:

An agent has a unique identity in the collaborative space, which identifies him/her in a univocal manner before the other interlocutors. This code that is initially generated by the system at the request of the user's group, is entered by the latter every time he/she connected to the system. In the case of humans, with VR gestures that are associated to graphic and sonorous effects, the user is able to trace a sequence of movements and gestures (including, for example, the digitation of musical notes) that identifies him/her on an exclusive basis and associates his/her unique code. This sequence of gestures is directly deduced from the code itself and communicated to the user so that he/she may know how to identify him/herself using gestures.

### Real or Al-based channel source:

As regards the communication of data from sensors or destined for reproducers, there are three approaches:
a) Customer approach: the Al behaves like another human at customer level, with the sole assistance of a software interface that translates the sentences that are outgoing from the Al into customer signals that are typical of human interfaces, and signals coming in from the virtual environment into sequences that may be interpreted by the Al. This interface constitutes the customer interface "language" for any Al wishing to connect to the virtual environments. Its computational cost at an Al server is low and it works on less information from the virtual environment than the next option. This approach is completely analogous to the human approach at the level of communication between the customer and the server.
b) Server approach: similar to the above, but the interface is programmed and executed in the Al server and the communication between the latter and the Al customer is made in terms of outgoing and incoming sentences that may be interpreted by the Al. It works on all desired information from the virtual environment, but the computational cost at the server is high and should be dynamically adapted depending on the number of Als connected. This option implies that the server must have a subsystem to adapt the communications with the customer, to transform the sentences received from the Al to typically human data that may be interpreted by the settings server and to transform the typically human data in sentences that may be interpreted by the Al..
c) Mixed approach: the information provided by the Al server to the Al is complemented by direct calculations from the Al local interface. In this case, there is an input/ output channel that corresponds to typically human data and another one with direct sentences to and from the Al. Normally, the server will prepare general sensorial information for all of the Als and a local interface along with selective sending will filter the relevant information for each particular Al.

Once this emulation of human behaviour has been achieved, the processing in the virtual setting is similar for humans and Als. In this invention, the possibilities of use by Als are not analysed. Naturally, the sensors and interfaces to be programmed shall reflect the complexity of the Als.

### Graphic representation of agents:

The agents may be characterised in the virtual environment by their morphology, kinematics, clothes and face. In this regard, the central system accepts the sending of sufficient graphic information over the net in forms that are prepared for this purpose, for automatic reconstruction of a realistic mapping of the face of the avatar that represents the agent, which may include the kinematics of facial expressivity. The clothes may be chosen from an extensive catalogue of avatar mappings, as well as the body morphology and its kinematics, using these network forms (normally pages from Internet).

In addition, existing techniques based on the recognition of shapes with sensors that are applied to the body or micro cameras, may help the system to reconstruct in much more detail the real morphology of the body and its mobility, the facial image and its mobility, in real time. This information may be sent directly through data channels or pre-processed at the customer in order to adapt them to the performance and representation needs of the associated sensorial server.

The avatar is the sensorial representation of an agent in the virtual environment. It includes any kind of graphic, sonorous and sensorial characterisation that identifies the agent in the collaborative environment. In general, we shall refer indistinctly to agent to mean its avatar or to speak about the person or Al that lends the latter life or behaviour.

### Bodily and spatial mobility and action in the virtual environment: VR gestures.

The agents may move freely in the virtual environment. In order to do so, the system described adapts the configuration of sensors available to the agent to mobility sentences that are ordered to its avatar. There is no unique association of a given sensor to a given objective (for example, the data glove to move the hands). Therefore, the general concept of the virtual reality gesture, VR gesture, has been defined. There is a general association between situations that are detected in time slots of data channels coming from all types of sensors, and the enabling of behaviours of the agent avatar and its possibilities for action programmed for the virtual environment. However, these associations may be redefined for a specific agent, allowing a more personalised configuration and the possibility of the interaction of individuals with bodily or sensorial deficiencies. In any case, there are two approaches for detecting VR gestures based on data channels:
a) Customer approach: the VR gestures are identified in the agent's PC.
b) Server approach: the VR gestures are identified in the sensorial server.

### Language for communication with the objects:

Communication with the objects is always carried out using VR gestures (this concept includes voice sentences). Each object has its own language of VR gestures, which the agent must know in order to be able to communicate with it. For example, just as we saw in the definition of VR gesture, in the case of voice-based communication, there are two approaches:
a) customer approach: the customer PC has the appropriate software for translating voice sentences into labelled sentences that are directly identifiable by the object.
b) server approach: the voice channel is sent to the sensorial server and the latter identifies the labels.

In this regard, inventory representations are also considered to be objects and their language for communication depends on the context of the agent in the virtual environment.

### Conversation between agents:

The agents may communicate with each other through their voice channels. Each agent has an internal voice channel object in his/her inventory, in constant use, which allows him/her to communicate orally with the rest of the users in the system, making use of familiar network dialogue techniques.

In addition, the system here described carries out an optimisation screening on the channels informed to the customers, making use of proximity techniques and avoiding the sending of voice data to agents that are distant from the agent using the source PC in the channel or in different locations from the latter's or defined as acoustically insulated.

An agent may enable a dialogue level. This means that only agents with the same dialogue level will be able to hear him/her. A user may at any time request to change to the dialogue level of another agent, by looking at him/her and performing a particular VR gesture. If the other agent has the aforementioned dialogue level, he/she will change to it automatically. It is possible to change to the standard dialogue level or change levels at any time by means of a VR gesture. This screening is also applied in order to avoid sending channels to agents that do not have the specified dialogue level.

### Agent access levels:

There are various ways in which an agent may or may not access certain situations or information. An agent has one or more dialogue levels. These levels serve to restrict hearing the voice of an agent in forums of agents that do not have this dialogue level. An agent has one or more information access levels. These levels serve to allow the agent access to detailed information on objects and their inventory.

Finally, the agents may group themselves by administration from network templates, with a view to group exchanging of data channels. An agent can place at the disposal of the interlocutors of a group to which it belongs, channels owned by him/her, either using network templates or directly from the virtual environment by means of a VR gesture. Therefore, the channel is transmitted to the rest of the interlocutors in guest mode, allowing it to be used, but not left, deleted or exchanged.

### Channels and exhibitors:

In the virtual environment, there are channels that represent a flow of data from sensors installed in the real word in networked PCs or from remote data warehouses. For example, images, sounds, electrical signals, magnetic fields, temperature, humidity or pressure. Any object may have one or more channels defined.

The exhibitors are special objects in the virtual environment that receive data flows from the channels and perform actions in the virtual environment depending on same. The actions may be either the variation in its attributes in the virtual environment (such as colour, mapping, sound, shape, angles or position) or the transmission of information that is deduced from the data received, to external reproduction devices (such as loudspeakers, displays, electrical resistances or magnetic field inducers). In any case, we shall call the act of reproducing these channels inside or outside the virtual environment "channel reproduction".

Therefore, a data channel may project its duly adapted and formatted information on the virtual environment by means of exhibitors, which, as we have seen, may also have associated external physical reproducers of the information received, connected to the PCs of the agents that have direct visibility of the exhibitor in the virtual environment (such as sonorous data through loudspeakers or video on displays).

The data in a channel may be saved in advance or collected from the sensors in real time. The way in which the reproduction of a channel through an exhibitor is enabled depends on the programming of the exhibitor.

For some channels whose data is numerical in nature, it is possible to obtain on an automatic basis intermediate values between two consecutive values, using interpolation techniques that are suited to the type of information transmitted by the channel, and preset values depending on the trend of the information in the channel, increasing the number of data to be reproduced in the exhibitor. Both the adaptation of the data from the sensors to the reproducers and the extension via interpolation and prediction, may occur in three different moments: at the time it is captured through the sensors at the local PC, at the time the data arrives at the sensorial server in the server itself or at the time when the data arrives to the PC that will reproduce them. It is also possible to use a mixed strategy to distribute the work load in two or three of these phases.

### Exhibitors of channels and context:

Each channel type is assigned to one or more contexts. A context defines a situation of the agent as regards the virtual setting and its objects, One example is the context defined by an agent looking at a video screen at a certain short distance. A video type channel will have this context assigned, although not necessarily on an exclusive basis. This allows to enable an inventory interface at the agent's request by means of a VR gesture, in order to access the video-type channels owned by same for reproduction in the video screen exhibitor.

As we know, data channel type objects are classified according to the possible context of use and each type of channel may be classified in more than one type of context. Therefore, a data channel that is inventoried by an agent may be reproduced in various types of exhibitor depending on the context. The channels that are annexed to the agent always have an associated exhibitor for exclusive use by the agent. The rest of the channels may be exhibited in exhibitors when they are free, i.e., when they are not being used by other agents. In the previous example, if the context had been similar but with a virtual loudspeaker instead of a video channel, and the video channel also had this context associated, the sound corresponding to the video channel could be reproduced in the aforementioned exhibiting loudspeaker, at the request of the agent complying with the context and as long as the loudspeaker was not being used by another agent.

In general, there are two types of exhibitors: shared use and exclusive use. Shared use exhibitors require a control over requests for reproduction of channels, as they are resources that are shared by various agents. In the exclusive-use case, the exhibitor is always at the user's disposal, and may be either a local object that only the agent can see in his/her virtual environment (a video preview terminal before community exhibition, for example), or a shared object to which only the latter has access (such as his/her own bodily mobility).

The exhibitors may be grouped in groups of exhibitors, which form a single unit in terms of the reproduction of equal contents on a simultaneous basis and in terms of the level of control over use and centralised exhibition.

### Enabling exhibitions:

There are various ways of ordering the reproduction of a channel in the virtual environment.

Enablement ordered by the agent through his/her inventory: the agent voluntarily enables the reproduction of a channel (real time or otherwise) by means of compliance with the right context for the reproducer, and making use of VR gestures both to enable the inventory interface and to select and use the channel in the reproducer.

Automatic enablement: The agent does not make a univocal decision on the reproduction of the channel, it depends on other factors. Within this category, there are three types of enablement: continuous, timed and based on context detection.

Continuous automatic enablement: The data in the channel are reproduced on a continuous basis in an exhibitor that is associated to the channel. For example, some channels are directly associated to the agent and executed on a permanent basis on exhibitors belonging to its avatar, which emit the information received through their associated reproducers on a constant basis. These channels belong to the agent's personal inventory, but are not separable from it (they are internal objects). The data from these annexed channels cause changes in the avatar, actions in the latter and/or reproductions through the associated external devices. Some examples of this are voice channels, head-turning, facial expressivity data, mobility of hands and arms using the data glove or brain activity. The exhibitors are the reproduction of sound from the avatar's mouth, the turning of the hierarchical joints in the structure of the avatar, the enablement of orders given by the avatar to other objects based on the identification of labels corresponding to neuronal activity patterns, etc..

Timed automatic enablement: The data in the channel are reproduced in an associated exhibitor, in time intervals that are defined by a preset time schedule in the virtual environment. This is the case, for example, of the regular output of financial data (channel) captured from a software interface that is installed in the management systems of a company and represented on a floating management graph (exhibitor) in the virtual environment, with the frequency that is decided by the regularity of the capture from the interface.

Enablement by detection of local or shared context: The data in the channel are reproduced by automatic detection in a particular local or shared context of the virtual environment. This context is defined as a specific, detectable situation of the statuses of the virtual environment and of its objects. For example, when an agent passes through a particular zone, it defines a context that enables reproduction on a screen in the aforementioned zone of a particular video, at local level, or a particular acoustic presence signal that is audible to the agents around the same zone, on a shared basis.

Another example of this are vehicles (exhibitors) of spatial displacement in the virtual environment. When an interlocutor or automat starts to interact with a vehicle, the user's position and orientation become relative to the position and orientation of the aforementioned mobile exhibitor. According to the definition of the functionality of the vehicle exhibitor, it is possible to distinguish the following types:
- Automatic steering: The vehicle moves automatically without the intervention of the user agent. This vehicle has a stop and start control that allows the user to "get in" more comfortably.
- Manual steering: The vehicle moves according to the control of the VR gestures of the agent made through the inventory interface associated to the context defined by the vehicle. The data channel that is represented in the vehicle is the set of information given by the sensor on the data glove that is used to steer it.
- Mixed steering: The vehicle may only be used manually in certain parts of its itinerary, where it may allow from exclusive speed control in a preset path to total control within the limits of the zone.

The exhibitors have their own language for communicating with agents (context) and their own rules on controlling requests for exhibition. A video that is reproduced on a screen, for example, may only be stopped by the agent that ordered for it to be reproduced.

In groups of exhibitors, enablement based on any of its instances (exhibitor) enables the exhibition of the rest of the exhibitors in the group. Any operation regarding this exhibition is also performed for all of the exhibitors. The aforementioned control rules policy is performed on a transactional basis, by analysing all of the requests for control directed at the exhibitors in the group as if they referred to a single exhibitor.

### Channel types according to transmission dynamics:

There are three types of channels depending on the type of transmission from the emitting object to the exhibiting object. Pre-recorded channels: the data in the channel are recorded in advance and saved in the sensorial server and/or the agent's PC. Real time channels: the data in the channel are transmitted from the sensor modules to the PC where they are reproduced on an immediate basis through the associated exhibitors. Mixed channels: the data in the channel is saved in a sensorial server and communicated by means of streaming techniques when reproduction of same is enabled.

### Types of channels, exhibitors and exhibition dialogue depending on information. Spatial scope of the action:

The real time data that is liable for communication or saving includes any set of physical signals coming from analogue sensors located on any surface (including tissues in human body) or real physical fluid, discretised by means of analogue-digital converters and subsequently processed by any means for integration in a single data channel. The basic types are listed below:

### Agent's body mobility. Body exhibitor:

Captured by body sensors such as data gloves, spatial positioning trackers and the detection of angles of orientation, twist sensors or face-reading micro cameras. The information communicated in this case represents the bodily expressivity of the connected agent and is represented by variations in the properties of the avatar that represents the agent such as turning of the joints and changes to the mesh that makes up the face.

### Sonorous information:

Captured by microphones and processed for compression and spatialisation depending on the relative position of the object housing the channel, its orientation, speed, etc.. The information that is communicated in this case represents the shape of the wave captured by the microphone, the external device is the local user's earphones or the loudspeakers that are connected to the equipment. Reproduction in the output device includes the process of decompressing the packages sent.

### Two-dimensional graphic information:

Captured by camera and normally compressed before being sent to any local system. The information that is communicated in this case represents an image or sequence of images at a particular sampling frequency, the external device is, for example, the standard viewing system in the local system, which will represent the image or sequence following decompression, normally placing this viewing in the virtual space that is assigned by the channel exhibitor.

### Three-dimensional graphic information. Immersion auto-stereoscopy:

Captured by two or more cameras that are separated at a certain distance from one another and processed in the same way as the two-dimensional information, with the exception that the set of data contains information corresponding to various image channels and not just one, and that in order for it to be represented in the virtual space, it is necessary to intercalate two images calculated on the basis of the channels, by means of a process of three-dimensional reconstruction, and a subsequent process of reconstructing the stereoscopic effect within the stereoscopic virtual setting.

### Three-dimensional reconstruction:

Described in this invention as prior processes that are known and necessary for reconstructing the stereoscopic effect within the stereoscopic virtual setting, in order to represent particular objects that emerge volumetrically in the virtual environment, coming from image shots. The methods used for three-dimensional reconstruction are described as follows:

### Approach based on background colour detection:

Two cameras take shots from different angles (corresponding to the parallels of human eyes), of an object that is situated in front of a colour that is not recognisable in the object. The images are processed (in the PC of the sensors, the sensorial servers or the PCs that receive the reproduction) and the background colour is replaced by a transparent alpha channel. Finally, two processed images containing the exclusive images of the object corresponding to the view from the right and left eyes are obtained in each camera shot.

### Approach based on contextual shape recognition:

Two cameras take shots from different angles (corresponding to the parallels of human eyes), of an object that is situated in a real environment. A special shape recognition programme (run in the PC of the sensors, the sensorial servers or the PCs that receive the reproduction) identifies the shape of the desired object and processes the images in order to exclude any image that does not correspond to the aforementioned object. The image zones that are excluded are transformed into a transparent alpha channel. Finally, two processed images containing the exclusive images of the object corresponding to the view from the right and left eyes are obtained in each camera shot.

### Approach based on extended contextual shape recognition:

More than two cameras are used in a similar way to the simple contextual process explained above, with the exception that the programme deduces images corresponding to more than two angles on the basis of the analysis of the image channels, and integrates them in a structure that we shall call a holographic texture.

### Stereoscopic reconstruction:

This invention also describes the following process of the reconstruction of a stereographic effect within a stereoscopy in the virtual environment is described.

There are currently stereoscopic engines that access the three-dimensional structure of a setting provided by standard 3D graphic engines, and extract views from the left and right eye, which alternate on one or two screens depending on the stereoscopic viewing device that is used. Within the graphic structure managed by the engines, there are graphic components that may be accessed in order to be changed from tailored programmes.

The invention defines the existence of a module to change particular texture-type objects, located inside the structure generated by the stereoscopic engine for the graphic driver, immediately after the calculation of each channel. This procedure implies direct access to the data structure generated by the stereoscopic engine.

These objects correspond to textures that are used for reproduction in video exhibitors. The changing module receives at regular intervals (mainly defined by the system's capacity to generate images), two images corresponding to video shots representing views of the left and right eyes on a virtual or real setting. The stereoscopic engine synchronises with the changing module by means of a signal that is sent or captured from the stereoscopic engine, so that the changer modifies the textures to which the graphic driver accesses, meaning that when the latter views the left channel, the texture that is accessed is the same as that in the left image and when it views the right channel, the right image. This achieves a stereoscopic vision effect within the stereoscopic environment, allowing to see, for example, stereoscopic video in an exhibitor in the virtual environment.

As an alternative to this procedure, if the stereoscopic engine accesses the structure that is generated by the graphic engine, once for each channel (left and right), the changer may alternate the textures directly on the three-dimensional structure that is used by the graphic engine.

The left/ right images that are necessary for this process may come from various sources (pre-recorded 3-D video, channels described in 3-D reconstruction or stereo channels without reconstruction). There are two cases as regards the obtainment of these images:
1) The images from the left and right eyes are prepared in advance. In this case, the changer makes direct use of them.
2) The images from the left and right eyes must be calculated on the basis of a holographic texture. In this case, a process known as the perspective calculator will reconstruct these images on the basis of the holographic texture, locating in same the set of images that most closely represent each of the two angles (cylindrical or spherical coordinates, depending on the type of tomography) informed to the calculator from the stereoscopic engine and deducing for each eye-angle-set, an image that is associated to the eye and corresponding to the angle by means of well-known identification and interpolation techniques based on the set (in the case of spherical tomography, each angle is really formed by two angles in spherical coordinates).

The stereoscopic image that is represented by the sequence of left/right pairs from the sources may be directly projected on stereoscopic viewing systems, replacing the stereoscopic vision of the virtual setting. In order to do so, the system for viewing the setting momentarily gives way to a standard stereoscopic viewing system based on a series of left/ right couples. Finally, this system may be applied to image sources without the prior alpha channel process.

### Sensorial data and definition of its area of action:

Captured by any type of sensor (for example, thermal or electromagnetic), applied to fluids, surfaces or to the body of animals or individuals; discretised in interpolable information vectors and subsequently translated for representation in the local output device. The nature of the sensor need not necessarily be the same as that of the reproducer. One example of equivalent nature is a temperature sensor located on a pedestal at the highest part of a building, which captures the temperature and communicates it to nearby interlocutors in the virtual environment to the actual virtual representation of the pedestal. The interlocutors gather this data in their local systems and represent it using temperature emitters installed in the physical body. One example of unequal nature is the same temperature sensor, represented in the local system as a colour tone that is more or less intense than that of the image representing the virtual sky where the virtual representation of the sensor is located.

### Sensors in the virtual environment.

Within the virtual environment, sensors are programmed to capture data produced in the virtual environment and routed to data channels. One example of this is the subjective vision of an agent inside the virtual environment, viewed on a video exhibitor by another agent.

### Temporal immersion:

This is a special modality of sensors in the virtual environment. It may be enabled at the request of agents or on a contextual basis and consists of recording all of the network events and channels related to a particular zone in the virtual setting for a specified period of time. This data is stored in appropriately classified data channels, in a sensorial server, along with a copy of the virtual setting and of all of the objects surrounding the aforementioned zone. A special mode of executing the virtual environment will allow one or more agents to reproduce the events and channels that are saved on the previous setting (such as voices and exhibitions, for example) in the form of a record saved in three dimensions, participating in spectator mode (no possible interaction with the aforementioned reproduction) with the possibility of viewing the event from any angle and communicating with other agents that are connected to the record.

A version of this same concept with more relaxed resources implies the exclusive recording of stereoscopic image and sound from an angle that spans the area of interest for making the record. After that, the agents will be able to view it in the form of a stereoscopic projection in the stereoscopic environment, or directly by means of the direct viewing of the stereoscopy of the act.

### Data captured by software interface with management systems and databases:

Both the customer PCs and a sensorial server may have software interfaces installed for connection to external management systems and databases. These interfaces are programmed on a personalised basis depending on the type of data production system. In general, there will be various management channel-type objects that will allow the input of structured data from external production systems and it will be the interfaces that adapt to these channel formats. The exhibitors corresponding to these channels provide sensorial representations of complex information models that are used by the agent for perceptive understanding of complex informative realities coming from the management data. There are two types of approach: the extracted data is obtained in real time or on a timed basis based on batch dumping to data drawn up by the interfaces at certain time intervals during the day.

### Data captured by software interface with production systems based on artificial intelligence:

The concept is similar to that of management systems and databases, with the difference that the data is produced by a system based on Al.

### Access to electronic banking:

As we saw in the section on possession of objects and commercial exchange, an agent may make use of his/her credit/ debit card. Access to the graphic interfaces that are necessary for communication with the bank, in order to provide the right information for payment (such as the card no. and the expiry date), is performed in two different environments:
a) Environment oriented by the virtual system: The virtual system integrates in the representation of the inventories, access to personalised, browseable representations that allow to users to go through the phases of an SET-type transaction in complete security. The virtual system does not receive any confidential information on the card that is used, as it is approved in its procedures with the SET technology, which ensures privacy in this regard. There are channels for interconnection between the various interlocutors of an SRT-type process.
b) Environment oriented by Virtual POS: The virtual system temporarily disconnects the user from the controlled environment in order to provide the appropriate information through the virtual POS using safe SSL technology. Again, the virtual system needs to maintain communication channels with the legal interlocutors in this operation.

### Sub worlds:

The sub worlds are links made to remote systems in the network (such as web pages or vrml -virtual reality modelling language- settings) that make specific use of the representation systems belonging to the operating system and standard market programmes, in order to facilitate momentary access to other network information domains. The invention's immersion system has an association of types of external information domains, and associated virtual mobility, while always keeping VR gestures for the return to the original virtual environment. The following are examples of these links:
a) Links to 3-D worlds created in the Internet. One classical example is VRML. The association table will allow to launch a vrml browser that is prepared with a protocol for communication with external environments. The use is by means of VR gestures like the ones that are used in the virtual settings. By means of software technology for local access to the resources in the operating system, the additional code allows to access the immersion devices and their adaptation and communication to events in the vrml environment by means of standard access that is external to the structure of the vrml world. In addition, it is possible to make partial use of the resources in the collaborative environment based on avatars from the virtual setting, in order that the external accesses to the structure may represent basic options regarding to the cooperative environment within the external vrml world (representation of various interlocutors from the virtual world in the external vrml world, with positional oral interlocution, basic mobility and facial representation)
b) Link to standard browsing in web pages, based on the movement of the cursor and the pressing of various buttons on the data glove.

### Interlocutor screening:

The data channels are usually associated to voluminous sets of information and require network transit and process optimisation procedures, in order to prevent a user that does not need to access a particular channel from receiving and processing information on it. In order to do so, techniques such as the exclusion of interlocutors for reception of a particular channel, based on the volumetric radius of action of the associated exhibitor, shall be used. If the channel requires that a certain amount of voluminous information is at the customer before it is reproduced, double volumetric radius techniques may be used: enabling the sending of information by proximity and the possibility of interaction with the channel from close.

Moreover, the channels may be filtered by the agent categories. This means that only the agents that have a particular category may access certain channels, thus avoiding transmissions from channels to the users of inadequate channels.

### Real-time channel identification :

In general, a real-time channel is controlled by a driver, as follows:
- A software instance in a networked PC taking data through a hardware or software sensor that is connected to it directly or remotely. The driver is the only networked identified of the software instance in the PC.
- An agent carrying a sensor in the virtual environment, taking data from the virtual environment. In this case, the driver is the only identified of the agent in the virtual environment.

The real-time channel is associated to the taking of data from a hardware or software sensor, in turn exclusively identified in the network by means of a unique identifier, which will be as follows:
- General identification: The identifier of the driver and the type of device, in the case of devices that are the sensors of a single possible occurrence per driver.
- Correct identification: The identifier of the driver and the device of a particular type in the driver, in the case of devices that are the sensors of various possible occurrences per driver.

In any case, depending on the configuration of the assignments of channels to sensors in the virtual environment, a real-time channel is operational when it identifies its sensor as being active and functioning.

### Channel assignment:

The channels belong to the agents, as they are reproducible by them. There are various types of assignment of channels to agents:
1. Automatic assignment: all types of agents (humans or Al) have a series of preset channels that are necessary for basic interaction with the environment (such as the voice channel, the positional tracker channel at the head or the VR gestures channel based on the data glove). These channels are generally identifiable and are automatically assigned to the agent using the same driver to connect to the virtual environment and control the sensor.
2. Assignment by template-based sending: an agent may possess a channel that sends over the network, using templates prepared for this purpose, channel-type contents in the form of files, which are saved in the sensorial server. In this latter case, the agent may decide on the template or directly in the virtual environment, if the channel is exclusively his/her property or if he/she wishes it to be available to the interlocutors in his/her group or third party agents.
3. Internal channel assignment: an agent may possess a channel by means of a direct assignment made from the virtual environment management system.
4. Assignment by exchange/ purchase of channel: an agent may purchase or lease a channel to another agent, including standard exchange and by direct acquisition of free objects.
5. Environmental channels: environmental channels are data channels belong to the virtual system which are handled and exhibited through Al- or automatism-based agents to the rest of the agents for conditional use (for example, visual messages depending on the proximity to the exhibitor or according to the agent's group).

### Control over remote capture in real-time channels:

Real-time channels have the quality of being able to interact with the data received by the hardware or software sensors practically at the same time as such data is gathered.

In many cases, the sensor variables, configured from the virtual environment through adequate interfaces, which affect the gathering of the data (such as the orientation in mobile sensors, the frequency of takes or the focus of a lens). The way in which the agent can modulate these parameters depends on the language of the associated exhibitor and for example, VR gestures or the agent's own voice may used for natural recognition by a human or agent carrying the sensor.

### Signal transformers:

The values in a channel may be transformed using signal transformers (automatic or manual). One clear example of this is the simultaneous translation between languages in voice channels (by humans, or by programmes, depending on the state of the art at the time). The transformation process may be one of various types, depending on the time of enablement:
a) Prior transformation pre-recorded channels: the data are transformed before they are saved.
b) Real-time transformation: the data are transformed at the appropriate sensorial server or at the customer PCs, just before they are reproduced in the associated exhibitor. Within this modality, there are three alternatives:
   - Permanently associated to the channel: In this case, whenever the channel is going to be reproduced, the transformation shall be carried out in advance.
   - Associated to the exhibitor: In this case, any channel that is reproduced through this exhibitor will be transformed in advance.
   - Associated to the context: In a particular context of variables in the virtual system ( such as the position of the agent that owns the channel), the transformation may or may not be enabled.

### Objects with virtual scope:

Virtual objects are objects with a behaviour that is fundamentally independent of the data channels, so that its behaviour is considered to be local (hardly any network traffic). They largely contribute to lending an appearance that is pleasant and necessary in order to carry out the interlocution functions assigned to the invention. These objects usually exit regardless of the agents connected, although the system maintains the coherence of its representations and statuses between the networked PCs.

In order to achieve an appropriate background for current real-time representation systems (graphic engines), it should be functional, avoiding the inclusion of unnecessary elements. The basic functionalities to be covered by virtual objects are as follows:
- Natural background. The designs used should take into account the practical visibility factor, avoiding the inclusion of complex designs in areas where access is impossible or visibility is distant.
- Work environment background. Appropriate architectonic designs to create the sensation of immersion in a shared work environment. The automatic details provided remotely by the graphic engines will help to define a sufficient level of detail.
- Elements to represent work objects. For example, allowing the channels to be graphically represented using adequate models.
- Agent status transformation elements. This will allow an agent to recharge his/her level of potential (persistence) or skip to another virtual environment in the system.

### Background elements:

Background elements provide the virtual environment with an immersive sensation that is pleasant and intuitive for the human being and divide the virtual space in for the most part clearly differentiated sections: such as walking areas, working areas or open chat areas. The basic objects that make up the background are orography, browseable architectonic elements, mobile planes, fluids, the effects of particles and background noise.

### Orograph y:

Orography of varying typology (such as snow-capped mountains, forests or paths) formed by textured orographic meshes with control over collisions with moving objects, in which the three-dimensional elements that accompany them are situated (such as trees and vegetation).

### Browseable architectonic elements:

Buildings are textured three-dimensional structures that are appropriately placed in the volumetric space of the setting. The user may move around them as if they were real buildings, with corridors, doors, stairs, partitions, windows looking onto views over the outdoor setting, furniture, decoration and other graphic designs to support the sensation of immersion in a shared architectonic environment. The buildings are complemented by the use of exhibitors, such as multimedia exhibitions screens or lifts.

### Moving planes:

Special graphic effects (such as the sun, lightning, fog or lighting that corresponds to the phases in the day) created by the appropriate use of levels of transparency, textured objects and colour planes located in specific areas of the setting.

### Fluids:

Accumulations of fluids with their own variable wave animatics (such as rivers or the sea) formed by multi-textured meshes that may be deformed in real time in the vertices and in the relative position of the textures and the levels of transparency applied to them. The graphic and mobility characteristics inside and outside the fluid vary according to the configuration of the fluid.

### Effects of particles:

Real-time particle dynamics (such as rain or snow) localised in changing spaces in the setting, built using textured two- or three-dimensional objects located three-dimensionally in the space of the setting and in real time and characterised according to the type and dynamics (raindrops, snowflakes), their spatial location as an atmospheric agent in the setting, their volumetric dimension and their tiers of intensity from the nucleus of the volumetric dimension to the limits of same. They detect collision with other objects.

### Background noise:

Organised by placing sonorous objects in the three-dimensional space of the setting, with a local action spatial scope defined by cones or spheres of minimum and maximum intensity and by its functional scope of action.

### Representation objects:

These are objects whose function is simply to provide a sensorial representation for a concept: such as the representation of a data channel (a video tape, for example), a tree or a stone. A data channel may for example be associated to an object for representation that is freely exhibited in the setting. This is the object which the agent sees in order to acquire the channel, as the channel does not have its own representation.

Representation objects may have the ownership over the number of copies of the element they represent. For example, a virtual purse represents a certain number of virtual monetary units.

### Teletransporters:

The virtual environment has doors to access other virtual environments. These function like "telephones" within the virtual environment, used to access other virtual environments managed by the servers of virtual spaces that are the object of the invention, simply by pronouncing the name of the environments in question. Once inside the virtual environment, the user is identified, which means that the connection to another environment does not necessarily require identification using the user password. However, a particular virtual environment may not be accessible by definition for the agent requesting the skip. The agent remains in the virtual environment until the new environment is loaded and ready, when the skip occurs.

### Potential flow handlers:

The agents have certain potentials that determine their persistence in the system. The potential levels are associated to each agent and saved. These levels vary by interaction with the potential flow handlers that are present in the virtual environment, which allow the agents to perform operations of loading, unloading and transmission between agents. Their functionality therefore defines under which system circumstances ( such as contact with the agent or closeness) make changes to the potential levels of the agent involved, and to what degree.

### Basic communication system:

The communication system is formed by a network of servers that provide the functionality based on virtual reality. The network or farm of servers is protected by means of a firewall in its access to the Internet. The farm of servers are interconnected over the Internet with the customer users connected to the settings, the artificial intelligence customers, the sensor drivers and the web managers.

The server farm is comprised of a transactional database server, a control server, virtual setting servers, contents servers, sensorial servers, a web server, banking servers, logistic servers, artificial intelligence servers and messaging servers.

The transactional database server contains information on system maintenance and communicates with the customer PCs and the servers in the local network. The control server directs the agents and the remote sensors to the corresponding settings. The virtual setting servers update the events regarding the mobility and action of the agents that are connected through network customer PCs. The content servers save and send the virtual objects and exhibitors that provide the background for a particular setting, to the agents that are connected to it and under control by the setting servers. The sensorial servers process in real time data channels originating from network sensors for immediate forwarding to customers on demand or for deferred forwarding on demand. The web server enables the performance of remote operations against the database (DB) and the sending of files. The banking severs allow to carry out customer's banking transactions based on credit- or debit-cards, using SET or SSL technologies, or electronic money transfer in mini-payment operations. The logistic servers process input and output messages. The Al messages serve as the interface between the Als and the setting servers. The messaging servers send and receive messages from the agents in virtual environments to the banking or logistic servers.

The firewall protects the server farm from possible intrusions from Internet. Remote web connections allow to manage the DB for enabled users. The remote sensor drivers are PCs connected to sensors and the network. The Als are programmes that are connected by a network and which communicate, emulating human behaviour. The agents or customers connected to the settings connect to the farm server over the Internet and use basic immersion equipment that is formed by stereoscopic glasses, a positional tracker with six degrees of freedom, earphones, a microphone, two data gloves, a scanner/printer, a digitalising tablet and a smart card reader for safe banking transactions and electronic money payments using a chip/ purse card. The terminal connection is a PC with a very powerful graphic card connected by a network to the server farm; with a support for the head-mounted-display and the data gloves.

The invention is defined by the appended claims.

### DESCRIPTION OF DRAWINGS

In order to complement the description that is being made and with a view to helping towards a better understanding of the characteristics of the invention, according to an example of a practical embodiment of same, this description includes as an integral part of same a set of figures which on an illustrative and non-restrictive basis represent diagrams of the system and the communication procedure based on virtual reality, according to the object of this invention.
Figure 1.- Shows a diagram of the reconstruction of the stereoscopic effect within the stereoscopy that is typical of the virtual environment, when the images of the left and right eyes are prepared in advance.
Figure 2.- Shows a diagram of the reconstruction of the stereoscopic effect within the stereoscopy that is typical of the virtual environment, when the images of the left and right eyes are calculated on the basis of a holographic texture.
Figure 3.- Depicts the communication system based on virtual reality and its network configuration.
Figure 4.- Front view of the basic connection terminal equipment.
Figure 5.- Side view of the basic connection terminal equipment.

### PREFERRED EMBODIMENT OF THE INVENTON

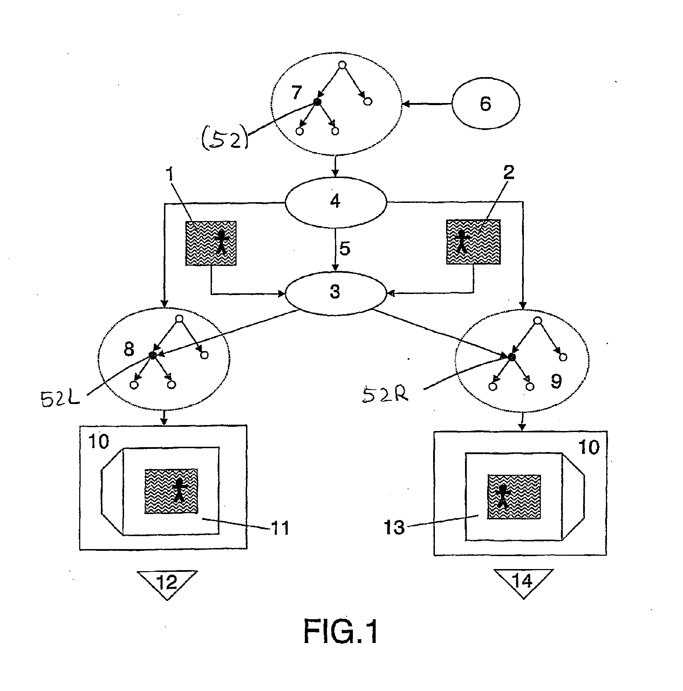

Figure 1 depicts the procedure of reconstructing the stereoscopic effect within the stereoscopy of the virtual environment when the images of the left eye (1) and right eye (2) are prepared in advance. The stereoscopic engine (4) works on the data structure (7) generated by the graphic engine (6) for each photogram that is calculated by the latter, deducing a new data structure (8, 9) for each eye, containing information on this photogram seem from the angle of the eye in question. Normally, the separation and parallels of the eyes are configured by the stereoscopic engine. This deduced information is what goes on to the graphic driver of the card, synchronising the sequential viewing of the deduced photograms (11,13) corresponding to the left and right eyes. The viewing of both fields corresponding to the same original photogram is adapted to the output device in order to provide the stereoscopic effect. There are various methods of achieving this stereoscopy, such as the alternation of left/ right photograms synchronised with the obturation of liquid crystal displays interposed between the eyes and the image; the alternation of left/ right photograms synchronised with the alternate viewing on two different displays (one for each eye); or the division of the image in two horizontal fields, one for each left/ right field, so that two displays (one for each eye) represent their associated field on a continuous basis.

The data structure (7) is generated by the graphic engine on the basis of the information provided by the virtual settings. The stereoscopic engine (4) accesses the data structure (7) and decomposes it in two structures (8, 9) that are necessary for sending to the card driver. This figure 1 does not depict the card driver, which would act in the passing of the represented structures (8, 9), to viewing on the display/s (10) (according to the stereoscopic method). Structures (8, 9) are viewed using images (11, 13), which correspond to the views from the left eye (12) and right eye (14) of the same object (52) in the virtual environment for which the stereoscopic engine has calculated the two corresponding fields. In this substructure, an image that is identified by the changing module (3) is mapped. However, before the original texture that is defined in the virtual setting for this object (52) is sent to the card driver, it is changed by the texture changer (3), which accesses the structures (8, 9) generated by the stereoscopic engine (4). Before the card driver represents the following photogram corresponding to the image from the left eye (left eye structure (8) calculated by the stereoscopic engine), the changer (3) first of all synchronises with a stereoscopic engine signal (5) and changes the original texture in this structure (8) in order to make it match the texture of the image from the left eye (1), coming from a real-time or pre-recorded channel that coincides with a view of a real object or an object from the virtual settings, seen using the left eye (12) (with or without prior processing of this image). Before the card driver represents the following photogram corresponding to the image from the right eye (2), a similar process is carried out, but using the texture that comes from a channel that is gathering images for the right eye (14).

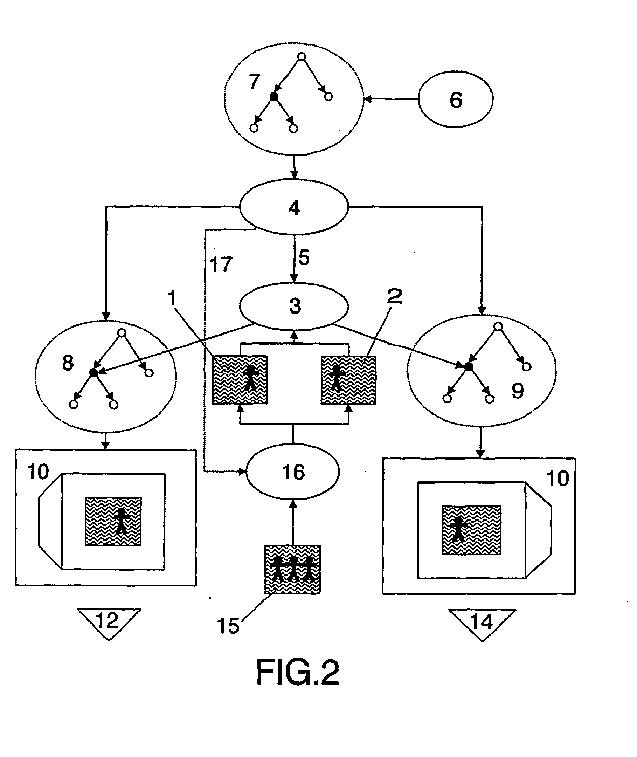

Figure 2 depicts the procedure of reconstructing the stereoscopic effect within the stereoscopy of the virtual environment when the images of the left eye (1) and right eye (2) are calculated on the basis of a holographic texture (15). In this case, the images are reconstructed using a process known as the perspective calculator (16). This calculator receives on an alternate basis from the modified stereoscopic engine, two calculated engines (17), which correspond to the angles formed by the sight vectors in each of the avatar's eyes as regards the centre of a hypothetical sphere or cylinder located in the virtual space and representing the holographic texture (depending on the layout of the cameras for shooting the images). If the tomography is spherical, the angle (in this case, they are really two angles for spherical coordinates) represents a vector that is centred in the centre of the sphere. If the tomography is cylindrical, the angle represents a vector that is perpendicular to the axis of the cylinder, centred in same. The calculator determines the set of images of the holographic texture that is hypothetically mapped on the sphere or cylinder (they are not really mapped in the virtual environment), surrounding the point of collision between the surface of the sphere or cylinder and the vector. Using interpolation and pattern recognition techniques, depending on the state of the art, this set of images is used to draw up a single image that represents the object from the precise angle in question. This is done for each eye and also for each photogram.

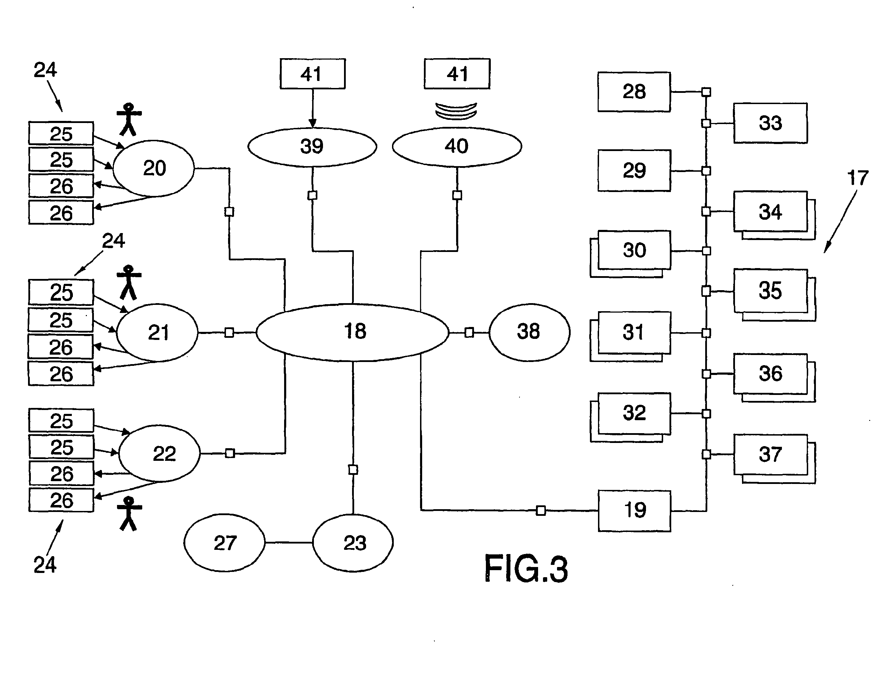

The communication system is depicted in figure 3, which shows the server farm (17) connected to the Internet (18) by means of a firewall (19). The servers (17) are therefore connected to the customers (20, 21, 22, 23, 38, 39, 40). These may be humans using a terminal connection (24), formed by sensors (25) and actuators (26), artificial intelligences (27) emulating human behaviour, DB managers (38) or sensor drivers (39, 40). The server farm is comprised of a transactional database server (28), a control server (29), at least one virtual setting server (30), at least one content servers (31), at least one sensorial server (32), a web server (33), at least one banking server (34), at least one logistic server (35), at least one artificial intelligence server (36) and at least one messaging servers (37). The server farm facilitates communication between the interlocutors by means of distributed processing of events, calculations and data.

The transactional DB server (28) communicates with the customer PCs and the local network servers. It hosts information that is relevant for system maintenance, such as:
- Information on the agents: such as their morphology, mapping apparel, face, access levels (conversation, information), the inventory of virtual objects and channels, objects that are transferred/ sold/ received/purchased, current and last position in each virtual setting, potential statuses, availability of SET identification card or credit card availability.
- Information on general system users: such as user typology (supplier, logistics, agent).
- Information on channels: such as the type of channel, network identifier, owner, contexts allowed, virtual representation object, sample object, real price, virtual price, no. units or type of purchase management.
- Information on contexts: Label-based context detection parameters.
- Information on types of exhibitors: such as the associated context or the parameters for adapting agent A's inventory to its interaction language.
- Information on exhibitors: such as type, virtual setting, position or status.
- Information on virtual objects: such as type, virtual setting, position, status, representation object, sample object, real price, virtual price or no. units.
- Information on purchase methodologies: such as type of management, interlocutors involved and method for communicating events.
- Logistic tracking information: such as operations in progress per supplier, methodology used, status of operations, object acquired/ sold associated to the operation or interlocutors associated to the operation.

The control server (29) is in charge of routing the agents and remote sensors to the appropriate setting server.

The virtual setting servers (30) are in charge of maintaining basic communication of events regarding the mobility and action of the agents that are connected by means of the network customer PCs, for a particular virtual setting. They communicate with the control server in order to facilitate skipping to another virtual setting.

The content servers (31) are in charge of hosting and forwarding the virtual objects and exhibitors that make up a particular setting, to the agents that are connected to it, under control by the setting servers. They have associated policies for remote updating of the customer PCs based on bandwidth availability and the status of the associated agents (information provided by the DB server).

The sensorial servers (32) are in charge of processing in real time data channels originating external connections in remote PCs for immediate transmission to customers on demand or for temporary storage for forwarding on demand. They are also in charge of the process of data transformation and forwarding screening. Normally, each server is oriented to a type of channel or a reduced set of channel types. One practical case is the sound server or the server for financial data provided in batches by an external company.

The web server (33) allows to perform remote operations on the DB and to send files, facilitating the following:
a) Management of personal details: by means of a web template, a user of the system may change his/her personal details in the central DB, such as the name, surname, National identity Card, e-mail and address. It is also possible to choose the morphology to be used in the virtual environment for representation as an avatar, clothes, movement kinematics and other qualities that differentiate the user in the virtual environment, from a preset palette of possibilities contained in the DB. Moreover, it is possible to send an image or a sequence of images representing the user's face and for the system to use an automatic mapping of the head of the chosen avatar, when connected to the virtual system.
b) Management of users in group: a web template allows a user administrator to manage the users in the group in the virtual system. A user must first have been registered in the DB in advance in order to be able to access the virtual environment and the management web described here. The DB provides each new user with a unique access password.
c) Forum management: a web template allows a user to manage the forums he/she creates, to be held in a particular location in the virtual setting, with automatic notification to selected users by means of electronic messaging. The forum host may decide that a particular forum he/she creates should only accept the agents in the group, or that any participation by a user should require confirmation of the host before being accepted. The virtual system may prevent access to the area associated to the forum, either physically or by means of acoustic signals for contextual presence detection, if the agent is not registered.
d) Management of proprietary channels: by means of a web template, the user may send the sensorial server as many files as he/she wishes. The template will control that they are files corresponding to types of data associated to valid channels that may be represented by exhibitors in the virtual environment. By means of this template, the user may also delete files from the server, download them from the server the local system, establish them as public for certain groups of agents, or establish an exchange value in virtual or real money. This option also allows the interlocutors to associate their proprietary channels to particular exhibitors in virtual settings and order them to be projected without the need to act as connected agents.
e) Registration in forums: a web template allows any valid user to register in a forum among the forums that are called by the administrators. As we have seen, this may be subject to confirmation.
f) Access to the inventory of owned/ received/ purchased objects: a web template allows any valid user to access all of the objects in the Inventory that are owned, transferred by third party agents or purchased from third parties, showing descriptions of same with the possibility of downloading if they are available data channels. It also includes information on the delivery status if it is a purchase order associated to delivery logistics that are informed externally.
g) Access to the inventory of sent/sold objects: a web template allows any valid user to access all of the objects in the inventory that have been sent to third party agents or sold to third parties, showing descriptions of same. It also includes information on the delivery status if it is a sale order associated to delivery logistics that are informed externally.
h) Administration of delivery orders: a web template allows a logistic user to manage the status of delivery orders in purchase/sale operations.
i) Management of contact list: a web template allows an agent to keep his/her list of relevant contacts with a view to sending and receiving messaging with them, from the virtual environment outwards and vice versa.
j) Access to records: A web template allows an agent to access records corresponding to image/sound channels representing temporary recordings taken from virtual setting situations.

The banking servers (34) perform the functions of connection with the necessary interlocutors in order to perform a customer's banking transaction based on credit/ debit card, making use of SET and SEL technologies, and to perform electronic money transfers in mini-payment processes. They have the necessary software to perform these operations on a secure basis.

The logistic servers (35) are in charge of ordering the sending of messages, processing incoming messages and making the necessary notes on these operations in the DB.

The Al servers (36) perform calculation operations on the data in each virtual setting, in order to perform the operation of conversion between the standard communication language based on labels and events that may be used by the remote Al connections and the main language for interaction and action used in the setting servers. Therefore, they act as the interface between the Als and the setting servers.

The messaging server (37) is in charge of sending and receiving outgoing/ incoming messages from/to the agents in the virtual environments, to the banking servers or the logistic servers.

The communication system also allows for remote web connections (38). These are performed by users that connect to the web server in order to carry out management tasks on the DB (logistic personnel, agents for sending or downloading files).

The drivers of the direct sensors (39) and remote sensors (40) are PCs that are connected to sensors (41) and to the network. They have the software that is appropriate for capturing and processing the data from the sensors. They are associated to an active exhibitor in a particular virtual setting.

The artificial intelligences (27) are programmes that are connected by a network and which to communicate between each other, make use of all of the customer functionalities for connection to the virtual settings (fully emulating human behaviour), or a subset of same, complemented by special functions for communicating events and labels, in a communication made with the Al servers.

Some examples of artificial intelligences are the guide Al, the commercial Al, the object-organising Al, the translating Al, the informative Al or the environmental Al. In the guide Al, an avatar that is guided by rules recognises the presence of a recently connected interlocutor registered in a forum that is organised for the current date and informs him/her of this event by means of a synthesised voice based on the reading of a calculated text. It also informs on how to arrive at the room or cubicle associated to the forum (meting, debate) and then takes him/her there, at the interlocutor's request. It accepts a small, basic dialogue tree with interlocutors based on the identification of voice labels spoken by human users, that allow it to advise on taking a particular vehicle in order to get to a particular building or zone requested by voice and then guiding the user to the vehicle or zone, walking alongside him/her and issuing acoustic signals on orientation depending on the human's orientation status.

The commercial Al takes permanent possession of an exhibitor, on which it displays a sequence of products (the format of which depends on the type of exhibitor) inventoried by the Al and with associated suppliers. When a request for negotiation is received from a human agent, it makes automatic dialogue based on a negotiation interface with same, in order to speed up the purchase of the object selected by the human (displayed at the time on the exhibitor). In addition, it offers a dialogue automatism based on a negotiation interface, which allows the human to access through the input section to the saleable products that are owned by the Ai. BY browsing through these in the input section, the Al displays them on the exhibitor.

An object-organising Al gathers free objects for spatial ordering in the virtual environment. It may also receive requests from a human agent to place an object owned by the latter and inventoried for exhibition in a particular zone that is recognised by the AI.

The translating Al starts its dialogue at the request of a human agent and until the human agent requests conclusion, the Al will gather the human's voice channel in intervals of a certain maximum time indicated by acoustic signals and by means of a speech recognition system that will depend on the state of the art, it will translate to a text that will be saved and automatically made available to the human agent by means of an automatic transfer. In addition, at the request of the human agent, based on a VR gesture, the agent shall read the partial translations or the total accumulated translation, in the original language or in another language, following translation to the target language based on software depending on the state of the art. This will provide an agent with a translator for communicating with other human agents. Optionally, the translating Al may operate by detecting various channels coming from various interlocutors wuth translation into various languages and drawing up of the respective texts for each interlocutor in his/her language. In order to do so, the dialogue between the human interlocutors must follow some rules on the order in which interlocutors speak that will determine situations of change of interlocutor that may be identified by the Al.

The informative Als communicate with the DB to offer information to agents on concepts that are associated to oral labels. Therefore, when an agent pronounces a particular oral label to an Al, the Ai locates the information associated to same and pronounces it by means of a voice synthesiser.

The environmental Als move and act in a basic manner on the setting, according to dynamic objectives that are guided by detectable statuses of the virtual environment. For example, an avatar representing an animal that moves according to particular paths.

The customers that are connected to the settings (20, 21, 22) are connected to the server farm. The control server identifies for each agent, which setting server will serve the latter. Each customer uses a basic immersion system (sensors associated to automatically assigned channels and actuators) formed by the following:
1) A head-mounted-display, including in one single item:
   a. Virtual reality stereoscopic glasses with a high degree of immersion and graphic resolution (pixels and colour depth)
   b. Positional tracker for the head, with 6 degrees of freedom.
   c. High precision stereo earphones.
   d. Highly sensitive microphone.
2) One or two data gloves (left and right hands), each one with 6 degrees of freedom, with five controllers on the torsion of the phalanges of the fingers and buttons to which variable functions may be assigned.
3) A high speed cylinder scanner/ printer.
4) A digitalising tablet of reduced dimensions.
5) A smart card reader to identify the agent in SET baking operations and enable operations based on electronic money (card-based mini-payment).

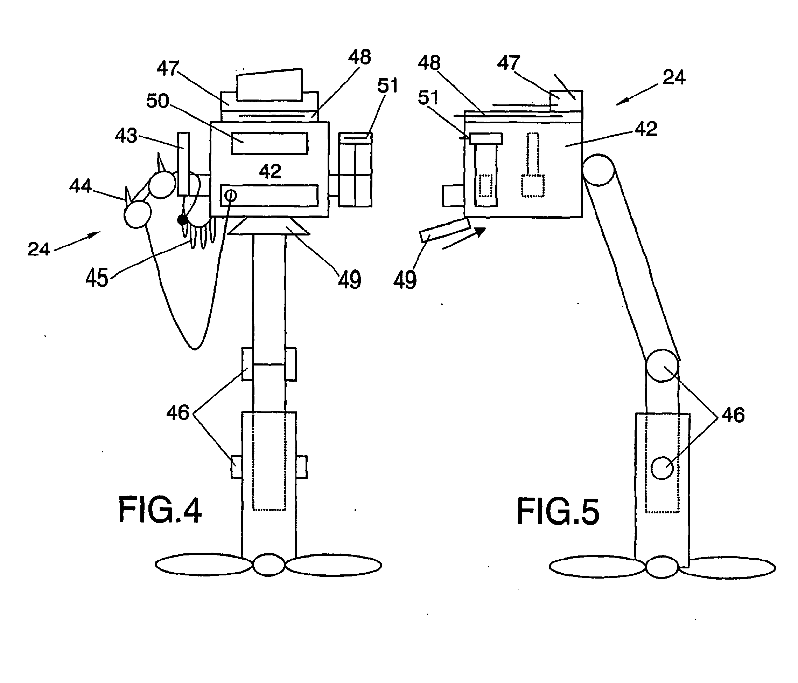

Figures 4 and 5 depict the basic connection terminal, which consists of a high level computer (42) (a PC in a preferred embodiment) with a powerful graphic card, connected by network to the server farm. This PC has a support (43) for the head mounted display (44) and the data gloves (45). Any element receiving the necessary static location for gathering data from the sensors is conveniently located supports of adjustable height (46) based on the PC, allowing it to be adapted to the agent's seated and standing positions. Any other emitting or receiving element that is necessary may be spatially located as deemed convenient. A scanner/printer (47) is fitted to the top of the PC, with a front tray (48) for the sheets of paper and which may also serve as a surface on which the user may write something, a small digitalising tablet (49) emerges from the bottom of the CPU. The PC does not have a keyboard or a screen. On the front, a small text display (50) serves to indicate nay necessary messages to the agent.

The agent or user wishing to use the system simply presses the on/off button and waits for the display to invite him/her to put on the immersion equipment and enter his/her user password. When the agent puts on the immersion equipment, his/her visual space displays a message inviting him/her to enter his/her user password, as well as a spoken acoustic invitation message. The password consists of a sequence of movements of the fingers. In other embodiments of the invention, another type of sensor could be used for digital recognition (such as digital fingerprints, iris recognition or facial recognition). If the agent has an appropriate purse or smart card, it may be introduced in the card reader (51), which will identify him/her in banking operations in order to make payments in a mini-payment or SET environment. Once access has been validated, the system asks the agent which virtual environment he/she would like to appear in. A voice recognition system based on a neuronal network identifies the pronunciation of the required environment, which will be translated and presented to the agent's view. In the virtual environment, he/she may chat and work with other interlocutors that are connected to the same virtual environment and for example, project on the exhibitors multimedia channels forwarded in advance over the Internet. The sensors and reproduces in this terminal connection may be used to write a note on the digitalising tablet and project it onto a virtual screen, print a document owned by the agent or user or scan a letter and show it to another interlocutor. These are all operations that are simple and very useful for the agent in an emulation of real life.

## Claims

1. Communication system based on virtual reality comprising at least one connection terminal (20,21,22) for the connection of at least one user (24) to virtual environments (30), wherein said at least one terminal is connected by the Internet network (18) to a server farm (17) through a firewall (19),
said server farm (17) comprising at least one server of virtual environments (30) and at least one sensorial server (32),
the system further comprising:
at least one sensor (25,39,40) connected to said at least one connection terminal wherein the connection terminal is connected through Internet to said at least one sensorial server (32) for sending real time data captured by said at least one sensor (25,39,40), wherein said captured data is exposed in the virtual environment or is recorded in data files through said at least one sensorial server,
a graphic engine (6) for generating a data structure (7) for each photogram it calculates, said data structure (7) being generated on the basis of information provided by said virtual environment (30),
an stereoscopic engine (4) for generating for each photogram a new data structure for the left eye (8) and a new data structure for the right eye (9) on the basis of said data structure (7), wherein said new data structures (8,9) contain information of said data structure (7) of a photogram seen from an observation angle for each eye (12,14) to generate a stereoscopic effect,
a texture changer module (3) having access to the data structures (8,9) generated by the stereoscopic engine (4) for modifying the texture of a virtual object (52L,52R) placed in the virtual environment (30), wherein the texture changer module (3) is configured to change the original texture of a virtual object (52L) in the structure for the left eye (8) in order to make it match a new texture of an image for the left eye (1) obtained from a real-time or from a pre-recorded channel that coincides with a view of a real object or a virtual object seen using the left eye (12), to provide a prepared image for the left eye (11),
and wherein the texture changer module (3) is configured to change the original texture of a virtual object (52R) in the structure for the right eye (9) in order to make it match a new texture of an image for the right eye (2) obtained from a real-time or from a pre-recorded channel that coincides with a view of a real object or a virtual object seen using the right eye (14), to provide a prepared image for the right eye (13),
wherein said change of texture is synchronous with said stereoscopic engine (4) through said texture changer module (3),
visualizing means (10) for visualizing said prepared images for the left and right eyes (11,13) of the virtual environment (30) with stereoscopy, so that the left eye (12) only sees the image corresponding to said left image (11), and the right eye (14) only sees the right image (13).

2. System according to claim 1 wherein it further comprises at least one stereoscopic actuator (26), reproducing data produced by said at least one connection terminal, or data sent from said at least one sensorial server.

3. System according to claim 1 wherein when the left and right eye images (1,2) corresponding to a certain moment or photogram of said real time or recorded video data, are prepared to be introduced into the data structure (7) that describes the virtual scenario,
said texture changer module (3) synchronises with said stereoscopic engine so that said texture changer module modifies the texture of virtual object accessed by a graphic driver which shows through a stereoscopic actuator (26) the left and right images prepared by the stereoscopic engine, so that when said driver shows the prepared left image (11) of the virtual environment, the texture (52L) accessed by said driver matches with the left image (1) of certain moment or photogram of said stereoscopic video data, and when the driver shows the prepared right image (13), the texture (52R) accessed by the driver matches with the right image (2) of said moment or photogram of said stereoscopic video data (3).

4. System according to claim 1 wherein if said stereoscopic engine (4) accesses the structure (7) generated by the graphic engine (6), once for each left and right eye vision of the virtual scenario, the texture changer (3) may alternate the textures directly on such generated structure (7).

5. System according to claim 1 wherein said at least one user (24) and the artificial intelligences (27) connected to said system through its connection terminals (20,21,22,23), have associated, at least one personal inventory of virtual objects and data channels,
said inventories of users (24) containing at least one data channel having information than can be exposed in the exhibitors of the virtual environment, said information coming from sensors (25,39,40) installed in said connection terminals,
said inventories of users (24) and artificial intelligences (27) can have data channels having information that can be exposed in said exhibitors of the virtual environment.

6. System according to claim 1 wherein said at least one sensorial server (32) stores network events and data from channels related to a particular place and time interval of the virtual environment, so that said events and data can be used later in the system.

7. System according to claim 1 wherein the images can be calculated on the basis of a holographic texture.

8. System according to claim 1 wherein the virtual scenarios (30) comprises objects in the form of data channels wherein said data channels reproduce data that is recorded in advance or captured in real time by sensors (25) connected to the terminals (20,21,22).

## Patentansprüche

1. Kommunikationssystem auf Grundlage einer virtuellen Realität, umfassend wenigstens ein Anschlussendgerät (20, 21, 22) für den Anschluss wenigstens eines Anwenders (24) an virtuelle Umgebungen (30), wobei das wenigstens eine Endgerät durch das Internetnetzwerk (18) an eine Serverfarm (17) durch eine Firewall (19) angeschlossen ist,
wobei die Serverfarm (17) wenigstens einen Server virtueller Umgebungen (30) und wenigstens einen Sensorserver (32) umfasst,
wobei das System des Weiteren umfasst:
wenigstens einen Sensor (25, 39, 40), der an das wenigstens eine Anschlussendgerät angeschlossen ist, wobei das Anschlussendgerät durch das Internet an den wenigstens einen Sensorserver (32) angeschlossen ist, um Echtzeitdaten zu senden,
die von dem wenigstens einen Sensor (25, 39, 40) erfasst werden, wobei die erfassten Daten in der virtuellen Umgebung zur Verfügung gestellt oder in Datendateien durch den wenigstens einen Sensorserver aufgezeichnet werden,
eine grafische Engine (6) zum Erzeugen einer Datenstruktur (7) für jedes von ihr berechnete Fotogramm, wobei die Datenstruktur (7) auf Grundlage von Information erzeugt wird, die von der virtuellen Umgebung (30) bereitgestellt wird,
eine stereoskopische Engine (4) zum für jedes Fotogramm erfolgenden Erzeugen einer neuen Datenstruktur für das linke Auge (8) und einer neuen Datenstruktur für das rechte Auge (9) auf Grundlage der Datenstruktur (7), wobei die neuen Datenstrukturen (8, 9) Information der Datenstruktur (7) eines Fotogramms enthalten, das unter einem Beobachtungswinkel für jedes Auge (12, 14) gesehen wird, um einen stereoskopischen Effekt zu erzeugen,
ein Texturänderermodul (3), das Zugriff auf die Datenstrukturen (8, 9) hat, die von der stereoskopischen Engine (4) erzeugt werden, um die Textur eines virtuellen Objektes (52L, 52R), das in der virtuellen Umgebung (30) platziert ist, zu modifizieren, wobei das Texturänderermodul (3) dafür ausgelegt ist, die ursprüngliche Textur eines virtuellen Objektes (52L) in der Struktur für das linke Auge (8) derart zu ändern, dass sie zu einer neuen Textur eines Bildes für das linke Auge (1) aus der Ermittlung aus einem Echtzeit- oder aus einem vorab aufgezeichneten Kanal passt, der mit einer Ansicht eines realen Objektes oder eines virtuellen Objektes zusammenfällt, das unter Verwendung des linken Auges (12) gesehen wird, um ein präpariertes Bild für das linke Auge (11) bereitzustellen,
und wobei das Texturänderermodul (3) dafür ausgelegt ist, die ursprüngliche Textur eines virtuellen Objektes (52R) in der Struktur für das rechte Auge (9) derart zu ändern,
dass sie zu einer neuen Textur eines Bildes für das rechte Auge (2) aus der Ermittlung aus einem Echtzeit- oder aus einem vorab aufgezeichneten Kanal passt, der mit einer Ansicht eines realen Objektes oder eines virtuellen Objektes zusammenfällt, das unter Verwendung des rechten Auges (14) gesehen wird, um ein präpariertes Bild für das rechte Auge (13) bereitzustellen,
wobei die Änderung der Textur mit der stereoskopischen Engine (4) durch das Texturänderermodul (3) synchron ist,
Visualisierungsmittel (10) zum Visualisieren der präparierten Bilder für die linken und
rechten Augen (11, 13) der virtuellen Umgebung (30) mit Stereoskopie derart, dass das linke Auge (12) nur das Bild entsprechend dem linken Bild (11) sieht und das rechte Auge (14) nur das rechte Bild (13) sieht.

2. System nach Anspruch 1, des Weiteren umfassend wenigstens einen stereoskopischen Betätiger (26) zum Reproduzieren von Daten, die von dem wenigstens einen Anschlussgerät hergestellt werden, oder Daten, die von dem wenigstens einen Sensorserver gesendet werden.

3. System nach Anspruch 1, wobei dann, wenn die Bilder (1, 2) des linken und rechten Auges entsprechend einem bestimmten Moment oder Fotogramm der Echtzeit- oder aufgezeichneten Videodaten dafür präpariert werden, der Datenstruktur (7), die das virtuelle Szenario beschreibt, zugeleitet zu werden,
das Texturänderermodul (3) sich mit der stereoskopischen Engine derart synchronisiert, dass das Texturänderermodul die Textur eines virtuellen Objektes modifiziert, auf das von einem grafischen Treiber zugegriffen wird, der durch einen stereoskopischen Betätiger (26) die linken und rechten Bilder zeigt, die von der stereoskopischen Engine präpariert werden, sodass dann, wenn der Treiber das präparierte linke Bild (11) der virtuellen Umgebung zeigt, die Textur (52L), auf die von dem Treiber zugegriffen wird, zu dem linken Bild (1) eines bestimmten Momentes oder Fotogramms der stereoskopischen Videodaten passt, und dann, wenn der Treiber das präparierte rechte Bild (13) zeigt, die Textur (52R), auf die von dem Treiber zugegriffen wird, zu dem rechten Bild (2) des Momentes oder Fotogramms der stereoskopischen Videodaten (3) passt.

4. System nach Anspruch 1, wobei, falls die stereoskopische Engine (4) auf die Struktur (7), die von der grafischen Engine (6) erzeugt wird, zugreift, einmal für jede Ansicht des virtuellen Szenarios mit dem linken und rechten Auge der Texturänderer (3) die Texturen direkt an der derart erzeugten Struktur (7) abwechseln kann.

5. System nach Anspruch 1, wobei der wenigstens eine Anwender (24) und die künstlichen Intelligenzen (27) mit Anschluss an das System durch die Verbindungsanschlüsse (20, 21, 22, 23) hiervon wenigstens ein persönliches Inventar von virtuellen Objekten und Datenkanälen zugeordnet haben,
wobei die Inventare von Anwendern (24) wenigstens einen Datenkanal enthalten, der Information aufweist, die in den Exhibitoren der virtuellen Umgebung zur Verfügung gestellt werden kann, wobei die Information von in den Anschlussendgeräten installierten Sensoren (25, 39, 40) kommt,
wobei die Inventare von Anwendern (24) und künstlichen Intelligenzen (27) Datenkanäle aufweisen können, die Information aufweisen, die in den Exhibitoren der virtuellen Umgebung zur Verfügung gestellt werden kann.

6. System nach Anspruch 1, wobei der wenigstens eine Sensorserver (32) Netzwerkereignisse und Daten aus Kanälen im Zusammenhang mit einem bestimmten Ort und Zeitintervall der virtuellen Umgebung speichert, damit die Ereignisse und Daten später in dem System verwendet werden können.

7. System nach Anspruch 1, wobei die Bilder auf Grundlage einer holografischen Textur berechnet werden können.

8. System nach Anspruch 1, wobei die virtuellen Szenarios (30) Objekte in Form von Datenkanälen umfassen, wobei die Datenkanäle Daten reproduzieren, die vorab aufgezeichnet oder in Echtzeit von Sensoren (25), die an die Endgeräte (20, 21, 22) angeschlossen sind, erfasst werden.

## Revendications

1. Système de communication basé sur la réalité virtuelle comprenant au moins un terminal de connection (20, 21, 22) pour la connection d'au moins un utilisateur (24) à l'environnement virtuel (30), où ledit au moins un terminal est connecté par le réseau internet (18) à une grappe de serveurs (17) par une barrière de sécurité (19),
ladite grappe de serveurs (17) comprenant au moins un serveur d'environnement virtuel (30) et au moins un serveur sensoriel (32), le système comprenant en outre:
au moins un capteur (25, 39, 40) connecté audit au moins un terminal de connection, où le terminal de connection est connecté par internet audit au moins un serveur sensoriel (32) pour transmettre les données en temps réel capturées par ledit au moins un capteur (25, 39, 40), où lesdites données capturées sont exposées dans l'environnement virtuel ou sont enregistrées dans des fichiers de données par ledit au moins un serveur sensoriel,
un moteur graphique (6) pour produire une structure de données (7) pour chaque programme qu'il calcule, ladite structure de données (7) étant produite sur la base d'informations fournies par ledit environnement virtuel (30),
un moteur stéréoscopique (4) pour produire pour chaque photogramme une nouvelle structure de données pour l'oeil gauche (8) et une nouvelle structure de données pour l'oeil droit (9) sur la base de ladite structure de données (7), où lesdites nouvelles structures de données (8, 9) contiennent des informations de ladite structure de données (7) d'un photogramme vu depuis un angle d'observation pour chaque oeil (12, 14) pour produire un effet stéréoscopique,
un module de changement de texture (3) ayant accès aux structures de données (8, 9) produites par le moteur stéréoscopique (4) pour modifier la texture d'un objet virtuel (52L, 52R) placé dans l'environnement virtuel (30), où le module de changement de texture (3) est configuré pour changer la texture initiale d'un objet virtuel (52L) dans la structure pour l'oeil gauche (8) pour la faire correspondre à une nouvelle texture d'une image pour l'oeil gauche (1) obtenue d'un canal en temps réel ou pré-enregistrée qui coïncide avec une vue d'un objet réel ou d'un objet virtuel vu en utilisant l'oeil gauche (12) pour réaliser une image préparée pour l'oeil gauche (11),
et où le module de changement de texture (3) est configuré pour changer la texture initiale d'un objet virtuel (52R) dans la structure pour l'oeil droit (9) pour l'amener à correspondre à une nouvelle texture d'une image pour l'oeil droit (2) obtenue d'un canal en temps réel ou pré-enregistrée qui coïncide avec une vue d'un objet réel ou d'un objet virtuel vu en utilisant l'oeil droit (14) pour réaliser une image préparée pour l'oeil droit (13),
où ledit changement de texture est synchronisé avec ledit moteur stéréoscopique (4) par ledit module de changement de texture (3),
un moyen de visualisation (10) pour visualiser lesdites images préparées pour les yeux gauche et droit (11, 13) de l'environnement virtuel (30) avec la stéréoscopie de sorte que l'oeil gauche (12) voit seulement l'image correspondant à ladite image gauche (11), et l'oeil droit (14) voit seulement l'image droite (13).

2. Système selon la revendication 1, où il comprend en outre au moins un actionneur stéréoscopique (26) reproduisant des données produites par ledit au moins un terminal de connection, ou des données transmises dudit au moins un serveur sensoriel.

3. Système selon la revendication 1, où lorsque les images des yeux gauche et droit (1, 2) correspondent à un certain moment ou photogramme desdites données vidéo en temps réel ou enregistrées, sont préparées pour être introduites dans la structure de données (7) qui décrit le scénario virtuel,
ledit module de changement de texture (3) est synchronisé avec ledit moteur stéréoscopique de sorte que ledit module de changement de texture modifie la texture de l'objet virtuel auquel accède un driver graphique qui montre par un actionneur stéréoscopique (26) les images gauche et droite préparées par le moteur stéréoscopique de sorte que lorsque ledit driver montre l'image gauche préparée (11) de l'environnement virtuel, la texture (52L) à laquelle accède ledit driver correspond à l'image gauche (1) d'un certain moment ou photogramme desdites données vidéos stéréoscopiques, et lorsque le driver montre l'image droite préparée (13), la texture (52R) à laquelle accède le driver correspond à l'image droite (2) dudit moment ou photogramme desdites données vidéos stéréoscopiques (3).

4. Système selon la revendication 1, dans lequel, si ledit moteur stéréoscopique (4) accède à la structure (7) produite par le moteur graphique (6), une fois pour chaque vision de l'oeil gauche et droit du scénario virtuel, le changeur de texture (3) peut alterner les textures directement sur une telle structure produite (7).

5. Système selon la revendication 1, dans lequel ledit au moins un utilisateur (24) et des intelligences artificielles (27) connectées audit système par ses terminaux de connection (20, 21, 22, 23) ont associé, au moins un inventaire personnel d'objets virtuels et de canaux de données,
lesdits inventaires d'utilisateurs (24) contenant au moins un canal de données ayant des informations qui peuvent être exposées dans les exposants de l'environnement virtuel, lesdites informations provenant de capteurs (25, 39, 40) installés dans lesdits terminaux de connection,
lesdits inventaires d'utilisateurs (24) et d'intelligences artificielles (27) peuvent avoir des canaux de données ayant des informations qui peuvent être exposées dans lesdits exposants de l'environnement virtuel.

6. Système selon la revendication 1, dans lequel ledit au moins un serveur sensoriel (32) stocke des évènements de réseaux et des données de canaux liées à un emplacement particulier et intervalle de temps de l'environnement virtuel de sorte que lesdits évènements et données peuvent être utilisés ultérieurement dans le système.

7. Système selon la revendication 1, dans lequel les images peuvent être calculées sur la base d'une texture holographique.

8. Système selon la revendication 1, où les scénarios virtuels (30) comprennent des objets sous la forme de canaux de données, où lesdits canaux de données reproduisent des données qui sont enregistrées à l'avance ou capturées en temps réel par des capteurs (25) connectés aux terminaux (20, 21, 22).
